(19) Europäisches Patentamt
European Patent Office
Office européen des brevets

(11) **EP 1 927 447 A2**

(12) **EUROPÄISCHE PATENTANMELDUNG**

(43) Veröffentlichungstag:
**04.06.2008 Patentblatt 2008/23**

(51) Int Cl.:
***B28B 1/26*** (2006.01)     ***B28B 21/08*** (2006.01)

(21) Anmeldenummer: **07023103.0**

(22) Anmeldetag: **29.11.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **01.12.2006 DE 102006056719**

(71) Anmelder: **ERLUS AKTIENGESELLSCHAFT**
**84088 Neufahrn (DE)**

(72) Erfinder:
• **Tröger, Uwe**
 **84088 Neufahrn (DE)**
• **Triebswetter, Rudolf**
 **84061 Ergoldsbach (DE)**

(74) Vertreter: **LOUIS, PÖHLAU, LOHRENTZ**
**Postfach 30 55**
**90014 Nürnberg (DE)**

(54) **Monolithische Giess- und Druckgussformteile für den Kaminbau und Verfahren zur dessen Herstellung**

(57) Ein Verfahren und eine Gießform zur Herstellung eines monolithischen keramischen Formteils für den Kaminbau, ein monolithisches keramisches Formteil, hergestellt nach einem solchen Verfahren, sowie ein Verfahren zur Herstellung einer silikatischen Suspension zum Einsatz in einem solchen Verfahren, wobei besagtes monolithisches keramisches Formteils als Muffenrohr und/oder Rohr mit einer seitlichen Öffnung, vorzugsweise mit einem Abzweigungsstutzen, und/oder Kondensatauffangschale und/oder Abströmhaube für den Kaminbau ausgebildet ist. Eine silikatische Suspension wird im Gießverfahren oder im Druckgußverfahren in eine mehrteilige Gießform (100) mit poröser Oberfläche eingebracht. Aus der eingebrachten Suspension bildet sich an der porösen Oberfläche der Gießform (100) ein Scherben aus. Nach der Bildung des Scherbens wird die Gießform (100) entfernt. Der Scherben wird getrocknet und in einem Ofen gebrannt. Nach dem Abkühlen bildet der gebrannte Scherben besagtes monolithisches keramisches Formteil für den Kaminbau.

Fig. 1

EP 1 927 447 A2

**Beschreibung**

Die Erfindung betrifft ein Verfahren zur Herstellung eines monolithischen keramischen Formteils für den Kaminbau mittels des Gieß- oder Druckgußverfahrens, ein Verfahren zur Herstellung einer silikatischen Suspension zum Einsatz in einem solchen Verfahren, ein dadurch hergestelltes monolithisches keramisches Formteil für den Kaminbau, sowie eine Gießform zur Herstellung eines solchen monolithisches keramisches Formteils, wobei besagtes monolithisches keramisches Formteils als Muffenrohr und/oder Rohr mit einer seitlichen Öffnung, vorzugsweise mit einem Abzweigungsstutzen, und/oder Kondensatauffangschale und/oder Abströmhaube für den Kaminbau ausgebildet ist.

Die Gieß- und Druckgußtechnologie wird seit Jahrzehnten erfolgreich im Bereich der Geschirr- und Sanitärkeramik angewandt. Die Technik des Schlickergießens gehört zu den klassischen keramischen Formgebungsverfahren. Beim Schlickergießen wird eine gießbare, im allgemeinen wässrige Suspension, der sogenannte Schlicker, in eine poröse, meist mehrteilige Gipshohlform gegossen. Durch die Kapillarwirkung der Poren entzieht die Gipshohlform auf der Oberfläche ihrer Innenseite dem Schlicker Wasser und es bildet sich an der Oberfläche der Gipshohlform der sogenannte Scherben, entsprechend der Innenkontur der Gipshohlform. Da das Erstarren schon bei mäßigem Wasserentzug einsetzen soll, setzt man so wenig Wasser wie möglich zu. Dies erreicht man durch die Zugabe von Verflüssigern oder Elektrolyten (z.B. Soda, Pottasche), wodurch die Fließfähigkeit des Schlickers erhöht wird.

Das Hohlguß- und das Kerngußverfahren stellen zwei Varianten des Schlickergießens dar. Beim Hohlgußverfahren wird die mit Schlicker gefüllte Gipshohlform solange stehen gelassen, bis die gewünschte Wandstärke erreicht ist. Der überschüssige Schlicker wird nach der Scherbenbildungszeit aus der Gipshohlform ausgegossen. Nach dem Abschwinden des Scherben von der Gießform durch Trocknung kann der Rohling entnommen werden. Beim Kernguß geschieht die Scherbenbildung auf doppeltem Wege durch in die Hohlform eingebrachte Kernteile, und zwar sowohl auf der Innenseite der Gießform als auch um die Kernteile bis zum "Zusammenwachsen" der beiderseits ansteifenden Scherben zu einem einzigen starken Scherben.

Beim Druckguß wird eine Suspension unter Druck in eine Form gepreßt, wodurch die Produktionszeit und die Festigkeit des produzierten Werkstücks positiv beeinflußt wird. Beim Druckguß wirken nicht nur die eventuell vorhandenen kapillaren Eigenschaften der Gießform, sondern durch die Druckbeaufschlagung der Suspension wird die Anlagerung von Tonmineralteilchen an der Forminnenseite erreicht. Bei den im Druckguß verwendeten Formen kann es sich um Gips- oder Kunststoffformen, oder um eine Kombination dieser Materialien handeln. Reine Kunststoffformen können nur beim Druckguß, nicht beim Schlickergießen eingesetzt werden, da ihnen die bei Gips vorhandene Eigenschaft des kapillaren Ansaugens fehlt.

Die französische Patentanmeldung FR 2 706 803 A1 beschreibt ein Verfahren zur Herstellung eines keramischen Hohlkörpers aus dem Bereich der Feinkeramik mittels Druckgießen. Mithilfe einer Außenform und eines in die Außenform hineinragenden Stützdorns für den Hohlkörper wird ein monolithischer Scherben für eine Tasse mit Henkel ausgebildet.

Die deutsche Offenlegungsschrift DE 40 17 000 A1 beschreibt eine Arbeitsform für die Herstellung von rohrförmigen Formteilen aus keramischem Material, wie dünnwandigen rohrförmigen Formteilen oder rohrförmigen Formteilen mit Innenkonus, im Schlickerhohlguß. Ein Gehäuse umschließt einen Formkörper aus porösem Material, wie Gips, gasdicht. Das Gehäuse weist einen Druckgaseinlaß zu dem Hohlraum des Formkörpers und eine Öffnung für die Beschickung des Hohlraums des Formkörpers mit Schlicker auf. Dabei ist der Formkörper von einer mit Gasdruck beaufschlagbaren Schüttung umgeben.

Auf dem Gebiet der Grobkeramik, insbesondere der Baukeramik, das sich in den verwendeten Ausgangsmaterialien und den Prozeßbedingungen von dem Gebiet der Feinkeramik unterscheidet, wird die Gieß- und Druckgusstechnologie zumindest für komplexere Formen bislang nicht verwendet. Während in der Geschirr-/Sanitärkeramik vorrangig Kaoline und Feldspäte, d.h. eisenarme und weiß brennende, hochwertige Materialien eingesetzt werden, kommen in der Grob-/Baukeramik Lehm-, Ton- und grobkörnigere Schamottematerialien zum Einsatz. Kaolin und Feldspat waren früher durch die aufwendigeren Aufbereitungstechnologien in der Porzellanindustrie in ihrem rheologischen Verhalten besser für das Gieß- und Druckgußverfahren geeignet als die teilweise nicht oder gering behandelten Rohstoffe für Massen in der Grob-/Baukeramik.

Im Kaminbau werden keramische Formteile mit relativ komplizierten Geometrien wie Muffenrohre, Rohre mit seitlichen Öffnungen, Kondensatauffangschalen, Abströmhauben, Kondensatrückführungen, Rauchrohranschlüsse und Reinigungsöffnungen bislang nicht monolithisch hergestellt. Die Produktion derartiger Formteile erfolgt, indem man z.B. mittels isostatischem Pressen, Strangpressen oder Gießen ein Rohformteil herstellt, das durch Sägen, Trennen, Bohren, etc. nachbearbeitet wird. Es ist auch üblich, derartige Formteile als zusammengesetzte Körper aus einem keramischen Grundkörper und ein oder mehreren angeformten Ergänzungs-Formstücken zusammenzusetzen, vorzugsweise durch Kleben. Zu den Nachteilen der bisher verwendeten Verfahren zählen der hohe Fertigungsaufwand und die damit verbundenen Kosten. Zudem zeigen derartig hergestellte mehrteilige Formteile eine hohe Reklamationsanfälligkeit, da die Trenn- und Klebestellen oft zu Brüchen und Leckagen führen.

Es ist nun Aufgabe der Erfindung, ein Verfahren bereitzustellen, das die einfache und rationelle Herstellung monolithischer keramischer Formteile für den Kaminbau, ausgebildet als Muffenrohr und/oder Rohr mit einer seitlichen Öffnung, vorzugsweise mit einem Abzweigungsstutzen, und/oder einer Kondensatauffangschale und/oder einer Abströmhaube erlaubt, sowie ein dazu geeignetes Material bereitzustellen.

Die Aufgabe wird mit den Gegenständen der Ansprüche 1, 15, 17 und 24 gelöst. Die Erfindung verbindet die bekannte Technologie der Gieß- und Druckgußtechnologie mit der grobkeramischen Technologie des Kaminbaus.

Daraus erwachsen eine Reihe von Vorteilen gegenüber den bisher angewandten Verfahren zur Herstellung von Produkten der Kaminbautechnik.

Durch die monolithische Fertigung und durch den höheren Schamotteanteil im Gefüge entstehen bei thermischer Belastung weniger Spannungen. Daraus resultierende Schäden, z.B. Kondensataustritt, können so verhindert werden.

Ein weiterer Vorteil ist der Verzicht auf Trenn- und Klebestellen. Zum einen wird dadurch wird eine Minimierung der Fehler- und Schwachstellen (Bruch- und Leckagestellen) erreicht. Zum anderen führt das zu einer Reduktion von aufwendigen Trenn- und Klebearbeiten durch das Fachpersonal und damit zu einer Verringerung der zeit- und kostenintensiven Handarbeit. Gleichzeitig wird eine Reduzierung der Abnutzung der Trennwerkzeuge und eine Einsparung von Klebematerialien möglich.

Ein weiterer Vorteil ist der Einsatz von Rohrbruch als Schamotte. Das Korn des Bruchmaterials besteht aus der ursprünglichen Tonmatrix und dem Schamotteausgangskorn und wird erneut mit frischem Material umgeben. Dadurch findet eine bessere Einbettung der Körnung statt, da das Material nicht so inert ist wie die Ausgangsschmotte allein. Als Konsequenz ergeben sich Verfestigungen des gebrannten Scherbens. Vorgänge wie Schwindungen und Verbrennungen von organischen Bestandteilen (Glühverluste) im eingesetzten Material werden dadurch ebenfalls verbessert. Durch den Einsatz von Rohrbruch werden auch Phasenbildungen wie Mullit und Cordierit mit in den neuen Scherben eingebracht und können über das erneute Brennen verbessert werden. Zusätzlich werden durch das erneute Anlösen der $SiO_2$-Bestandteile durch Flußmittel bis zu einem bestimmten Punkt (Erweichung des Scherbens nimmt zu) bessere Produkteigenschaften erzeugt.

Durch diese Wiederverwendung von Rohrbruch als Schamotte ist eine Senkung der Materialkosten möglich. Zudem erlaubt es eine einfachere Versatzzusammenstellung. Die Anzahl der Versatzkomponenten ist geringer, da durch die Nassdispergierung eine größere Reaktionsfläche und Reaktionsfähigkeit der Tonmineralteilchen untereinander erzielt wird. Bei Trockenaufbereitungen müssen den Massen Zusatzstoffe wie z.B. Flußmittel in erhöhter Menge zugegeben werden, um gleiche Sintereigenschaften im Produktscherben zu erreichen. Zusätzlich sinkt durch die geringere Anzahl von Rohstoffen der Aufwand hinsichtlich Materialprüfung, Materiallagerung, Materialaufbereitung.

Die Herstellung der Formteile als Monolithe, d.h. einstückig ohne angeklebte Teile, kann entweder durch Gießen in Gipsformen oder mittels der Druckgußtechnik mit Gips- oder Kunststoffformen erfolgen. Dabei können entweder Gießformen gemäß der Hohlgußtechnologie oder der Kerngußtechnologie verwendet werden, oder es werden Gießformen verwendet, die die Hohlguß- und die Kerngußtechnologie kombinieren, d. h. in einem Abschnitt der Form erfasst die Scherbenbildung durch Hohlgusstechnologie und in einem anderen Abschnitt der Form erfasst die Scherbenbildung durch Kerngußtechnologie. Um ein Ausschalen der Formteile aus den Gießformen zu gewährleisten, bestehen die Gießformen aus mindestens zwei Teilen. In einer bevorzugten Ausgestaltung sind die Gießformen so ausgebildet, daß zwei einander ergänzende, vorzugsweise zueinander spiegelbildlich ausgebildete Gießformhälften eine Hauptgießform bilden, und zusätzliche Gießformteile in besagte Hauptgießform eingesetzt werden können. In einer anderen bevorzugten Ausgestaltung wird besagte Hauptgießform durch drei oder mehr einander ergänzende Gießformen gebildet.

Durch die vorliegende Erfindung werden moderne Entwicklungen in der Keramikindustrie für den Kaminbau nutzbar gemacht, die bisher nicht erschlossen waren. Erst geforderte Veredelungen der Oberflächen, gestiegene Qualitätsansprüche und Veränderungen in der Anwendungstechnik machten es in der Grob-/Baukeramik notwendig bzw. möglich, Gieß- und Druckgußverfahren anzuwenden. Auch Veränderungen in den nachfolgenden Herstellungsprozessen, z.B. der Brenntechnologie, ermöglichen es heute, mit geringerem und kostengünstigerem Aufwand, dichte, aber auch temperaturwechselbeständige Produkte, z.B. Kaminbauteile formstabil zu fertigen. Auch Veränderungen und Weiterentwicklungen im Werkzeug- und Maschinenbau erlauben ein breiteres Spektrum an Formen und dadurch weitere Anwendungsgebiete.

Während man beim einfachen Schlickerguß auf die Saugkraft der Gießformen, vorzugsweise hergestellt aus Gips, angewiesen ist, erfolgt beim Druckguß eine Druckbeaufschlagung auf die Suspension zur Scherbenbildung, was auch der Festigkeit des frisch gegossenen Formteile förderlich ist. Durch die Druckbeaufschlagung kann auch die Fertigungsgeschwindigkeit der Formteile erhöht werden. Typische Drücke für die Anwendung im Druckguß liegen im Bereich zwischen 25 und 40 bar.

Die erfindungsgemäßen Gießformen weisen eine poröse Oberfläche auf, d.h. die Innenseiten der Gießform, dort wo die in die Gießform eingefüllte Suspension in Kontakt mit der Gießform gelangt, sind porös ausgebildet. Dadurch kann das Wasser aus der Suspension in das poröse Material unter der Oberfläche eindringen während sich die suspendierten Teilchen, die aufgrund ihrer Größe nicht in das poröse Material der Gießform eindringen können, an der Oberfläche der Innenseiten der Gießform absetzen und einen Scherben bilden. Bei einer vollständig aus einem porösen Material, z.B. Gips, gebildeten Gießform kann Wasser aus der Suspension in das poröse Material der Gießform eindringen, die gesamte Wandung der Gießform durchwandern und an der gegenüberliegenden Oberfläche der Gießformwand abgeführt werden, z.B. durch Verdunstung.

Die Druckgußtechnik stellt aufgrund der hohen Druckbeaufschlagung erhöhte Anforderungen an die Gießformen. Aufgrund dessen zeigen die Gipsformen nach etwa 60 bis 80 Eingüssen, abhängig vom Feinkornanteil und dem Verflüssigergehalt, starke Verschleißerscheinungen bis hin zu Bruch. Demgegenüber weisen Kunststoffformen eine erheblich längere Standzeit auf, so daß sie für die Druckgußtechnik bevorzugt eingesetzt werden. Kunststoffformen überstehen, abhängig von Porenform und Größe sowie des Feinkornanteils der eingesetzten Materialien, bis zu 15.000 Eingüsse.

Zur Herstellung von Formteilen mit Standflächen werden bevorzugt mindestens dreiteilige Gießformen eingesetzt. Beispielsweise bilden zwei Teile der Gießform die Seitenwände des hohlen Formteils, während ein drittes Teil der Gießform als Einlegeteil ausgebildet ist, das dort in die Gießform eingesetzt wird, wo die Standfläche des Formteils ausgebildet werden soll. Dieses Einlegeteil kann aus Kunststoff, aus Gips, aus einer Kombination dieser Materialien oder aus einem anderen Material bestehen. In diesem Einlegeteil befinden sich auch Öffnungen, um den Füllstand der Suspension in der Gießform zu prüfen und gegebenenfalls zu korrigieren. Ein Einlegeteil kann auch zur Ausbildung einer Muffe notwendig sein.

In einer weiteren bevorzugten Ausführung wird vor dem Einsetzen des Einlegeteils die Gießform zu 90 bis 95 Prozent vorgefüllt. Beim Einsetzen des Einlegeteils verdrängt das Einlegeteil die eingefüllte Suspension, so daß die Gießform in etwa vollständig mit der Suspension gefüllt ist. Eventuelle Korrekturen des Füllstandes der Suspension in der Gießform, z.B. Nachfüllen der Suspension oder Entnahme von überschüssiger Suspension, können über die besagten Öffnungen in dem Einlegeteil vorgenommen werden.

Die Gießform kann auch mehrere Einlegeteile umfassen, um eine besondere Geometrie des Formteils realisieren zu können. Einlegeteile für Schrägführungen können ebenfalls in die Gießform eingebaut bzw. eingelegt sein.

In einer bevorzugten Ausführung werden Flächen der Gießform, die mit der Suspension in Kontakt kommen, vor dem Einfüllen der Suspension mit einem Trennmittel beschichtet, um nach der Bildung des Scherbens das Entfernen oder das Ziehen des Formteils aus der Gießform zu erleichtern. Dieses Trennmittel kann Teflon, Lack, Öl oder einen anderen Beschichtungs- oder Versiegelungsstoff beinhalten.

Vorzugsweise weist die Gießform einen oder mehrere Kanäle für die Anwendung von Luftstößen und/oder Wasserstößen auf, mit denen das Entfernen des Scherbens aus der Gießform erleichtert wird. Die Luft- bzw. Wasserstöße können durch Preßluftanlagen bzw. Wasserpumpen erzeugt werden und über Schlauchansätze in Teilen der Gießform, z.B. in einem Einlegeteil, in die Gießform eingekoppelt werden.

Eine Gießform für den Einsatz im einfachen Schlickerguß weist eine oder mehrere Öffnungen auf, über die die Suspension eingegossen und/oder ausgegossen werden kann. Erforderliche Füllstandshöhen der Suspension in der Gießform können darüber ebenfalls reguliert werden. Eine Gießform für den Einsatz im Druckguß weist Kanäle auf, über die die Suspension unter Druck in die Gießform eingebracht und/oder aus der Gießform abgesaugt werden kann. Die Lage der Öffnungen und Kanäle ist vom jeweiligen Formteil abhängig und gehört zum Fachwissen eines Fachmanns auf dem Gebiet des Schlickergießens bzw. Druckgusses.

Getrocknet wird das Formteil entsprechend der Notwendigkeit bzw. Empfindlichkeit des Formteils. Je nach Formteil können Trockentemperaturen zwischen 30 und 110 ˚C sowie Trocknungszeiten zwischen einer und 24 Stunden angewandt werden.

Vorzugsweise wird das getrocknete Formteil im Ofen auf einem Brennhilfsmittel, der sogenannten Bomse, zwischen 1150 und 1250 ˚C gebrannt, wobei Temperaturen im Feuerfestbereich bis ca. 1300 ˚C ebenfalls angewandt werden können. Das Brennhilfsmittel verhindert das Anhaften und eine Deformation des Rohscherbens während des Brandes bzw. während des Schwindungsprozesses. Das Brennhilfsmittel muß dem jeweiligen Formteil in Größe und Form angepaßt sein.

Formteile, die mittels der beschriebenen Gieß- oder Druckgußtechnik monolithisch hergestellt werden können, umfassen beispielsweise die folgenden Artikel aus dem Kaminbau: Anschlußformstücke für die Rauchgasführung, Reinigungsöffnungen, Reinigungsöffnungen mit integrierter Kondensatauffangschale, Bauteile für die Kondensatrückführung (= KRF), gerade Innenrohre in verschiedenen Längen, Muffenrohre, Kondensatauffangschalen, Abströmhauben, keramische Aufsätze (z.B. offene Aufsätze, Firstaufsätze, zugeingeschränkte Aufsätze), Putztürdeckel, Stehkränze, Schrägführungen oder Anschlußteile für versetzte Kamine.

Beim erfindungsgemäßen Verfahren zur Herstellung der silikatischen Suspension wird zunächst das Anmachwasser in einen entsprechend geeigneten Behälter (z.B. Faß, Rühr- oder Quirlbottich, Mühle) eingefüllt und ein handelsüblicher Verflüssiger zugegeben. Der Verflüssiger enthält vorzugsweise einen Peptisator und/oder einen Elektrolyt. Gemäß einer vorteilhaften Ausführung wird dem Anmachwasser zunächst nur ein Teil des Verflüssigers zugegeben und der Rest des Verflüssigers im Laufe des Anrührens der Suspension nach und nach zugesetzt.

Im Anschluß daran wird dem Anmachwasser unter dem Einfluß des Rühr-, Quirl- oder Mischaggregats der Ton- und Schamotteanteil zugegeben. Die Suspension kann auch in Naßtrommelmühlen aufbereitet werden um die eingesetzten Materialien besser in ihre Primärkörnung aufschließen zu können. Dies ist vor allem notwendig, wenn Materialien vor dem Zumischen nicht trocken gemahlen wurden, sondern direkt als Rohmaterial (Rohtone) eingesetzt werden. Durch den Misch- und/oder Löseprozeß in dem Mischbehälter werden die silikatischen Materialien aufgeschlossen und es entsteht eine wässrige Suspension silikatischer Teilchen in dem Anmachwasser. Die beschriebene Abfolge an Misch- und Zugabeschritten ermöglicht eine optimale Aufbereitung der erfindungsgemäßen silikatischen Suspension. Vorzugsweise erfolgt der beschriebene Mischvorgang unter Vakuumbeaufschlagung zur Entfernung von Luftblasen aus der Suspension.

Nach dem Misch- und/oder Löseprozeß der Ausgangsmaterialien muß die Suspension in Bewegung gehalten werden, um ein Absetzen und Sedimentieren der eingebrachten Ton- und Schamotteteilchen zu verhindern. Dies erfolgt in dem Mischbehälter durch ein Rührwerk.

Es ist besonders vorteilhaft, eine Suspension mit möglichst niedrigem Wassergehalt und möglichst hohem Litergewicht anzumischen. Vorzugsweise liegt das Litergewicht der angerührten Suspension im Bereich > 1600 g/Liter, insbesondere in einem Bereich von 1865 bis 1910 g/Liter. Der dadurch gegebene hohe Feststoffanteil hat den Vorteil, daß bei den nachfolgenden Prozessen wie z.B. Trocknung oder Brand nicht allzu viel Energie verbraucht wird oder keine hohen Ausschußzahlen entstehen. Durch den hohen Feststoffanteil werden auch die Scherbeneigenschaften des fertigen Produkts positiv beeinflußt.

Die Einstellung der Konsistenz der Gesamtmischung hängt von der Menge an zugegebenem silikatischen Materialien ab. Durch eine Steigerung der der Suspension zugegebenen Menge an silikatischen Materialien kann die Konsistenz der Suspension eingestellt werden. In einer bevorzugten Ausführung weist die Suspension verarbeitungsfertig eine gießfähige Konsistenz auf, so daß ein einfaches und zeitsparendes Einbringen der Suspension in Gießformen, z.B. in einer Gießstraße, möglich ist.

Bei einer bevorzugten Ausführung beträgt der Gehalt an Anmischwasser (auch: Anmachwasser) 40 bis 80 Gewichtsprozent der Trockensubstanz des Tonmaterials. Der Anmischwassergehalt ist vom Wasserbedarf des Tonmaterials und der Verflüssigungseigenschaft des Tonmaterials abhängig. Der Anteil der Lehm- und Tonmaterialien beträgt 40 bis 60 Gewichtsprozent, bezogen auf die gesamte in der Suspension angemischte Trockensubstanz, d.h. Ton und Schamotte. Vorteilhafterweise beträgt der Schamotteanteil ebenfalls 40 bis 60 Gewichtsprozent der gesamten in der Suspension angemischten Trockensubstanz, d.h. Ton und Schamotte. Der Verflüssigeranteil, bezogen auf den Lehm- und Tontrockenanteil, beträgt zwischen 0,1 und 0,6 Gewichtsprozent.

Zur Verdeutlichung der Berechnung der Gewichtsprozente (= Gew.-%) soll ein Beispiel dienen: Bei einer Masse von 100 kg Ton und einer Menge an Anmischwasser von 50 kg beträgt der Anmachwassergehalt 50 Gewichts-%. Werden 100 kg Ton mit 70 kg Schamotte gemischt, beträgt der Anteil des Tonmaterials 58,8 Gew.-% und der Anteil der Schamotte 41,2 Gew.-%.

Besonders bevorzugt ist es, für die Schamotteanteile Kaolin-, Ton-, Siliziumkarbid- (= SiC) oder Cordieritschamotte zu verwenden. Es ist vorteilhaft, als Ton- und Schamotteanteile aufgemahlenen Bruch von Kaminbauteilen, z.B. Schornsteinrohren, zu verwenden, wobei der Bruch sich üblicherweise in den Hauptbestandteilen aus gebranntem Ton und Cordierit zusammensetzt. Dabei wird bevorzugt Mahlgut in einer Korngröße bis etwa 2 mm eingesetzt.

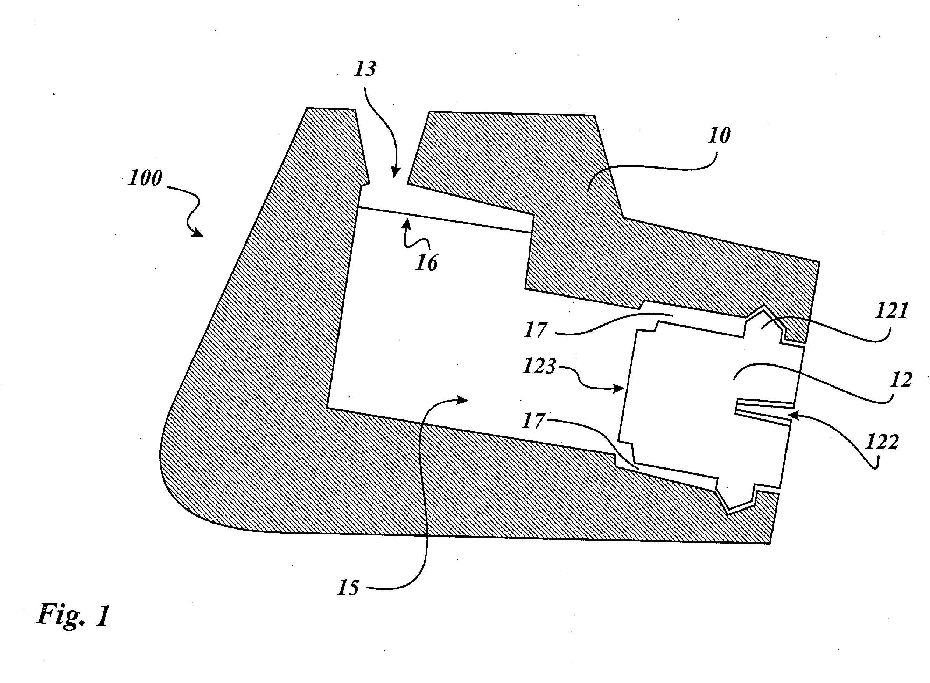

Ein Ausführungsbeispiel der Erfindung ist in Figur 1 dargestellt und wird im Folgenden näher beschrieben. Figur 1 zeigt einen Schnitt durch eine Gießform 100 zur Herstellung eines Anschlußformstücks mit einer Standfläche und einer Muffe. Die Gießform 100 besteht aus zwei spiegelbildlich geformten Seitenteilen 10 und 11 (das Seitenteil 11 befindet sich vor der Schnittebene und ist daher nicht dargestellt) sowie einem Einlegeteil 12, ein Kernstück, das die Gießform 100 nach unten hin abschließt und zur Ausbildung der Muffe dient. Die Gießform 100 besteht aus einem porösen Material, z.B. Gips oder poröser Kunststoff. Die Gießform 100 muß ausreichend stabil sein, um den hydrostatischen Druck, der von dem in die Gießform 100 eingegossenen Suspension ausgeübt wird, ohne Verformung aufzunehmen.

Das Einlegeteil 12 weist einen Wulst 121 auf, der formschlüssig in entsprechende Aussparungen der Seitenteilen 10, 11 eingesetzt werden kann. Auf diese Weise wird das Einlegeteil 12 dicht schließend mit den Seitenteilen 10, 11 verbunden. Die beiden Seitenteile 10 und 11 werden mittels einer Haltevorrichtung ebenfalls dicht schließend miteinander verbunden. Besagte Haltevorrichtung kann z.B. als elastisches Band oder als Klammervorrichtung ausgebildet sein. Unter dicht schließend wird ein Abschluß verstanden, der es einer gießfähig eingestellten Suspension nicht ermöglicht, aus dem Hohlraum 15 der Gießform 100 hinaus zu fließen.

Oben in der Gießform 100 befindet sich eine Öffnung 13 zum Eingießen der Suspension in den durch die Gießform 100 gebildeten Hohlraum 15. In einer vorteilhaften Ausführung werden die an den Hohlraum 15 angrenzenden Innenflächen der Gießform mit einem Trennmittel beschichtet, um das spätere Ausschalen des Scherbens zu erleichtern. In die Gießform 100, deren Öffnung 13 vertikal nach oben angeordnet ist, wird die erfindungsgemäße wässrige Suspension, der sogenannte Schlicker, eingegossen.

Das Eingießen der gießfähig eingestellten Suspension von oben durch die Öffnung 13 in den Hohlraum 15 erfolgt in einer Weise, daß der gesamte Hohlraum 15 nach und nach ohne Lufteinschlüsse gefüllt wird, bis die eingefüllte Suspension eine gewünschte Füllhöhe 16 erreicht hat. Bei der Festlegung der Füllhöhe 16 muß der Schwund des sich bildenden Scherbens während der Trocknung berücksichtigt werden. Beim Eingießen läuft der gießflüssig eingestellte Schlicker auch in die Muffenbereiche 17, die zwischen den Seitenteilen 10, 11 und dem Einlegeteil 12 ausgebildet sind. Das Einlegeteil ist an seiner Stirnseite 123 so ausgebildet, daß sich dort kein Scherben ausbilden kann. Beispielsweise wird die Stirnseite 123 vor dem Einsetzen des Einlegeteils 12 in die Gießform mit einer wasserundurchlässigen Isolationsschicht, z.B. Teflon, versehen, um ein Festsaugen in der Form zu verhindern.

Nach dem Einfüllen des Schlickers in den Hohlraum 15 der Gießform 100 wird die Gießform ruhig gelagert. An den nicht isolierten Innenseiten der Gießform bildet sich aus dem Schlicker ein Scherben mit zeitlich zunehmender Wandstärke (Hohlguß). Lediglich in den Muffenbereichen 17 ist die erreichbare Wandstärke des Scherbens durch die Geometrie der Gießform 100, insbesondere durch das Einlegeteil 12 begrenzt (Kernguß). Die sich an den Innenseiten der Gießform aus der Suspension ablagernden keramischen Teilchen bilden das gewünschte Formstück aus. Nachdem sich der Scherben mit der gewünschten Wandstärke gebildet hat, wird der überflüssige Schlicker durch Drehen der Gießform 100 über die Öffnung 13 aus der Gießform 100 ausgegossen. Bei der in Fig. 1 beschriebenen Gießform wird also die Technologie des Hohlgusses mit der des Kerngusses kombiniert.

Zum Ausschalen des Scherbens aus der Gießform 100 wird das Einlegeteil 12 mit einem Luft- oder Wasserstoß beaufschlagt. Zu diesem Zweck weist das Einlegeteil 12 einen Schlauchansatz 122, z.B. eine Bohrung, in die ein Schlauch für die Druckluft oder das Druckluft-Wassergemisch für das Ablösen des Scherbens gelegt wird, auf. Falls das Einlegeteil 12 aus Gips besteht, kann der Luft- bzw Wasserstoß über das Kapillar- und Porensystem des Gips-Einlegeteils 12 an den Formling weitergegeben werden. Andererseits ist es auch möglich, daß das Einlegeteil 12 durch das schnelle, abrupte Einfließen von Luft oder Wasser eine kurzzeitige, schockartige, geringfügige Volumenzunahme erfährt. Dadurch löst sich der anliegende Scherben von dem Einlegeteil 12. Es ist möglich, daß auch die Seitenteile 10, 11 derartige Kanäle zur Aufnahme von Luft- oder Wasserstößen aufweisen. Vorzugsweise löst sich der Scherben nach dem Lösen der Haltevorrichtung der Gießform 100 aufgrund der Trennmittel von den Teilen der Gießform.

Ganz allgemein kann die in Fig. 1 dargestellte Gießform 100 auch bei Anwendung der Druckgußtechnik zum Einsatz kommen, falls die Gießform 100 ausreichend stabil ausgebildet ist. Insbesondere ist es von Vorteil, beim Druckgrußverfahren verschleißarme Gießformen aus porösem Kunststoff zu verwenden. Bei Anwendung der Druckgußtechnik wird die Öffnung 13 als Druckkanal ausgebildet, über den der Schlicker unter Druck in den Hohlraum 15 eingebracht wird und nach Bildung des Scherbens der überflüssige Schlicker wieder abgesaugt wird. Bei Anwendung der Druckgußtechnik wird nach dem Einbringen des Schlickers in die Gießform 100 der Druck aufrecht erhalten. Dies hat den Vorteil, daß sich der Scherben unter Druckbeaufschlagung schneller als beim einfachen, drucklosen Gießverfahren bildet.

Nach dem Ausschalen des gebildeten Scherbens aus der Gießform 100 wird der Scherben getrocknet. Zur Formlingstrocknung dienen Tunneltrockner und Kammertrockner. Nach der Trocknung des Scherbens wird der Scherben in einem Brennofen gebrannt. Der Restfeuchtegehalt der Rohlinge sollte für den Brand im Tunnelofen weniger als 3 % betragen. Der Brand erfolgt vorzugsweise im Tunnelofen. Das Brenngut wird bis zur Garbrandtemperatur aufgeheizt und nach einer Haltezeit planmäßig abgekühlt. Danach ist das neu gebildete Formteil einsetzbar.

Fig. 1 a zeigt die Gießform 100 in einer alternativen Ausgestaltung, bei der in der Gießform 100 ein weiteres Einlegeteil 18 zur Ausbildung einer Schrägführung für eine Kamera eines Kaminkehrers im Inneren des produzierten keramischen Formteils vorhanden ist. Das Einlegeteil 18 weist eine Länge 180, eine Breite 181 und eine Tiefe 182 auf. Weiterhin weist es in einer Höhe 183 eine Auswölbung auf. Typische Abmessungen (Rohmaße) für eine beispielhafte Ausgestaltung des Einlegeteils 18 sind in Tabelle 11 angegeben. In der ersten Zeile von Tabelle 11 sind die Bezugszeichen 180 bis 183 angegeben, in der zweiten Zeile sind die den Bezugszeichen entsprechenden Maße in der Einheit Millimeter angegeben. Fig. 1b zeigt eine Ansicht eines mit ein oder mehreren anderen Einlegeteilen produzierten keramischen Formteils, eines Anschlußformstücks 101 mit einer Standfläche 103. An der Rückseite weist das Anschlußformstück 101 eine Aussparung 102 auf, die durch die besagten ein oder mehreren anderen Einlegeteile erreicht wurde.

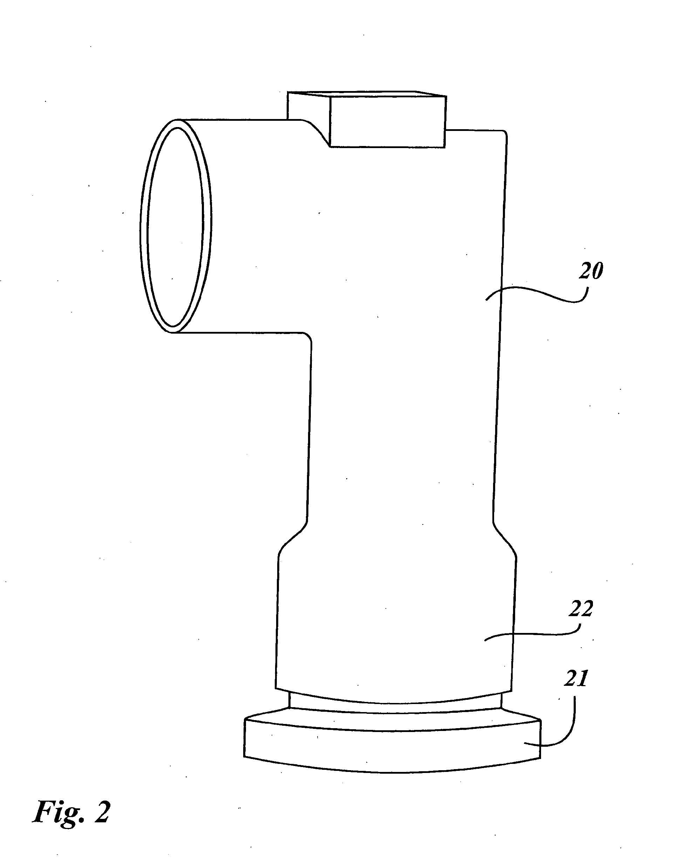

In einer besonders vorteilhaften Ausgestaltung wird der Scherben vor dem Brennen auf ein Brennhilfsmittel gesetzt. In Falle des Formteils aus Fig. 1 wird das Brennhilfsmittel vorzugsweise an der Stelle des Scherbens eingesetzt, an der während des Gießens das Einlegeteil 12 angeordnet war. Diese Situation ist in Fig. 2 dargestellt, die eine Ansicht eines Scherbens 20 auf einem Brennhilfsmittel 21 zeigt. Der Scherben 20 wird auf das Brennhilfsmittel 21 plaziert und in dieser Konstellation in den Brennofen transportiert. Der Scherben 20 wird dann, auf dem Brennhilfsmittel 21 stehend, im Ofen gebrannt, wodurch ein gebrauchsfertiges Formteil entsteht. Durch das Einsetzen des Brennhilfsmittels 21, der sog. Bomse, wird die Formhaltigkeit einer Muffe 22 des Formteils 20 sichergestellt, d.h., das Brennhilfsmittel 21 sorgt dafür, daß sich die Abmessungen der Muffe 22 während des Brandes nicht verändern.

Es ist auch möglich, daß das Brennhilfsmittel 21 schon vor dem Trocknungsprozeß eingesetzt wird und bis nach dem Brand in bzw. an dem Scherben 20 verbleibt. In einer anderen vorteilhaften Ausgestaltung kann das Einlegeteil 12 der Gießform 100 zugleich als Brennhilfsmittel verwendet werden. Auf diese Weise dient das Einlegeteil 12 neben seiner Funktion als Gießform als einfache und zuverlässige Haltevorrichtung für den Transport des Scherbens sowie als Brennhilfsmittel. Der Scherben kann während des gesamten Produktionszyklus vom Guß über die Trocknung bis zum Brand auf dem Einlegeteil 12 verbleiben. Dies bringt vor allem bei empfindlichen Formteilen Vorteile.

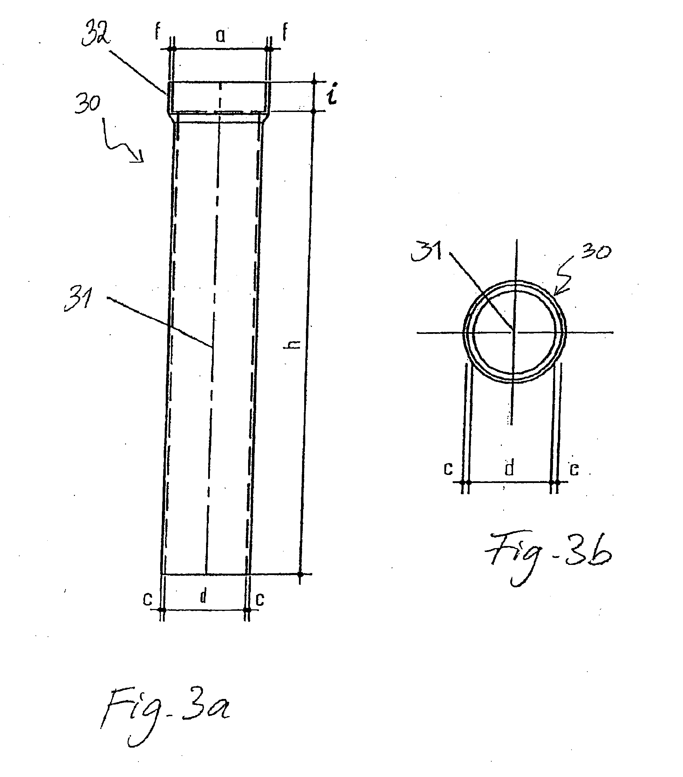

Die Figuren 3a und 3b zeigen ein erfindungsgemäßes monolithisches keramisches Standardrohr 30. Fig. 3a ist eine Seitenansicht des Rohres 30 mit einer Symmetrieachse 31. Das Rohr 30 weist eine Muffe 32 mit einem Innendurchmesser a und einer Wandstärke f auf. Außerhalb der Muffe 32 besitzt das Rohr 30 einen Innendurchmesser d und eine Wandstärke c. Die Gesamtlänge des Rohres 30 setzt sich zusammen aus der Muffenhöhe i und der Restrohrlänge h. Fig. 3b zeigt eine Druntersicht des Rohrs 30, und zwar von dem der Muffe 32 entgegengesetzten Ende des Rohres 30.

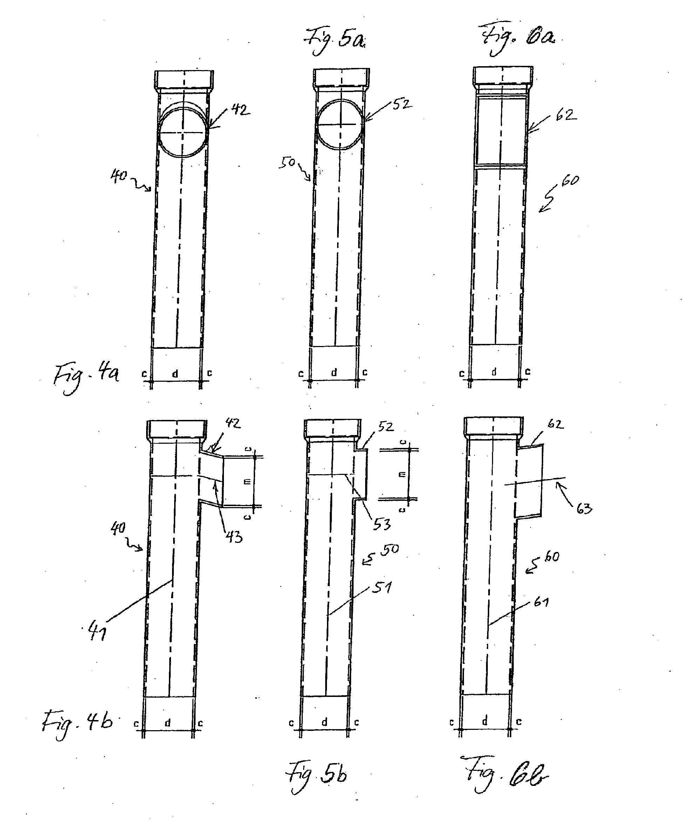

Die Figuren 4a und 4b zeigen ein erfindungsgemäßes monolithisches keramisches Rohr 40 mit einem schräg abzweigenden, kreisrunden Anschlußstutzen 42. Fig. 4a ist eine Seitenansicht des Rohres 40. Das Rohr 40 besitzt einen Innendurchmesser d und eine Wandstärke c. Fig. 4b ist ein Schnitt entlang der Mittelachse 41 des Rohres 40 und der Mittelachse 43 des Anschlußstutzens 42. Der Anschlußstutzen 42 besitzt eine Wandstärke c und einen inneren Anschlußdurchmesser m.

Die Figuren 5a und 5b zeigen ein erfindungsgemäßes monolithisches keramisches Rohr 50 mit einem lotrecht abzweigenden, kreisrunden Anschlußstutzen 52. Fig. 5a ist eine Seitenansicht des Rohres 50. Das Rohr 50 besitzt einen Innendurchmesser d und eine Wandstärke c. Fig. 5b ist ein Schnitt entlang der Mittelachse 51 des Rohres 50 und der Mittelachse 53 des Anschlußstutzens 52. Der Anschlußstutzen 52 besitzt eine Wandstärke c und einen inneren Anschlußdurchmesser m.

Die Figuren 6a und 6b zeigen ein erfindungsgemäßes monolithisches keramisches Rohr 60 mit einem schräg abzweigenden, rechteckigen Anschlußstutzen 62. Fig. 6a ist eine Seitenansicht des Rohres 60. Das Rohr 60 besitzt einen Innendurchmesser d und eine Wandstärke c. Fig. 6b ist ein Schnitt entlang der Mittelachse 61 des Rohres 60 und der Mittelachse 63 des Anschlußstutzens 62.

In Tabelle 1 sind für verschiedene in den Figuren 3a bis 6b dargestellte Rohre zugehörige Bauteil-Abmessungen, entsprechend den Bezugszeichen a, c, d, f, h und m aus den Figuren 3a bis 6b, aufgelistet. Diese Abmessungen stellen bevorzugte Maße dar, die nach dem erfindungsgemäßen Verfahren realisierbar sind. Die erste Spalte mit der Bezeichnung "TYP" gibt die Rohr-Nennweite DN an. DN (= Diameter Nominal) kennzeichnet die Nennweite (Anschlußmaß) des Rohres. Die Angabe DN entspricht ungefähr dem Innendurchmesser des Rohres in Millimeter. Die Zahlenangaben aller anderen Spalten sind in Millimeter angegeben.

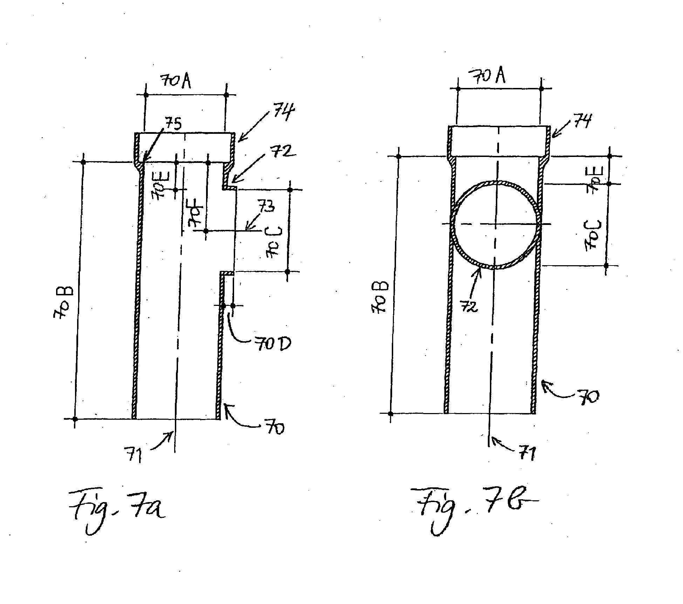

Die Figuren 7a und 7b zeigen ein erfindungsgemäßes monolithisches keramisches Rohr 70 mit einem lotrecht abzweigenden, kreisrunden Anschlußstutzen 72 und einer Verbindungsmuffe 74. Der Anschlußstutzen 72 dient z.B. zum Anschluß eines Rauchrohres einer Feuerstätte, die Verbindungsmuffe 74 zur Aufnahme eines weiteren keramischen Rohres zur Ausbildung eines Schornsteins für die Leitung von Rauchabgasen nach oben ins Freie. Fig. 7a ist ein Schnitt entlang der Längsachse 71 des Rohres 70 und der Mittelachse 73 des Anschlußstutzens 72. Das Rohr 70 weist außerhalb der Rohrmuffe 74 einen Innendurchmesser 70A auf.

Die Rohrlänge 70B wird gemessen von dem Fuß der Muffe 74, gekennzeichnet durch eine Vorsprung 75 an der Innenseite des Rohres 70, bis zum Rohrende am unteren Ende des Rohres 70. Die Mittelachse 73 des Anschlußstutzens 72 hat einen Abstand 70F von dem Vorsprung 75. Der der Muffe 74 nächstgelegene Punkt auf dem inneren Kreisumfang des Anschlußstutzens 72 hat einen Abstand 70E von dem Fuß der Muffe 74, gekennzeichnet durch den Vorsprung 75 an der Innenseite des Rohres 70. Der Überstand 70D des Anschlußstutzens 72 mit Innendurchmesser 70C in Bezug auf das Rohr 70 wird gemessen von der Außenseite des Rohrs 70 bis zur Stirnseite des Anschlußstutzens 72. Fig. 7b ist ein gegenüber dem Schnitt in Fig. 7a um 90° um die Rohrlängsachse 71 gedrehter Schnitt.

In Tabelle 2 sind für das in den Figuren 7a und 7b gezeigte Rohr 70 mögliche Bauteil-Abmessungen, entsprechend den Bezugszeichen 70A, 70B, 70C, 70D, 70E und 70F, aufgelistet. Diese Abmessungen stellen bevorzugte Maße dar, die nach dem erfindungsgemäßen Verfahren realisierbar sind. Alle Zahlenangaben in Tabelle 2 sind in Millimeter angegeben.

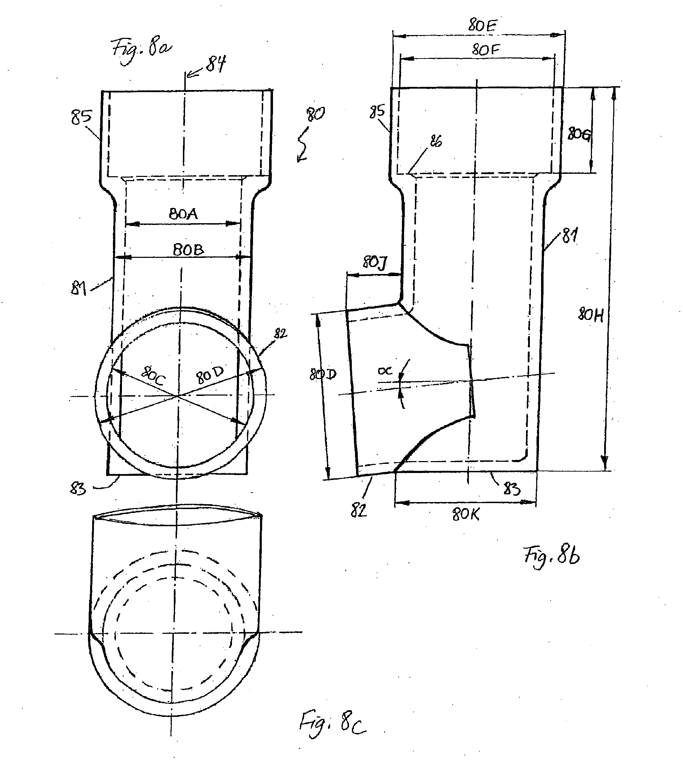

Die Figuren 8a, 8b und 8c zeigen ein erfindungsgemäßes monolithisches Bauteil, das als Kondensatrückführung 80 (= KRF) dient. Die KRF 80 besteht aus einem Standard-Rohr 81 mit Längsachse 84 und Muffe 85, einem Stutzen 82, der unter einem Winkel $\alpha$ am Fußende des Rohr 81 angesetzt ist, sowie einem Fußteil 83. Fig. 8a zeigt eine Ansicht der KRF 80. Das Rohr 81 weist außerhalb der Muffe 85 einen Innendurchmesser 80A und einen Außendurchmesser 80B auf. Der kreisrunde Stutzen 82 weist einen Innendurchmesser 80C und einen Außendurchmesser 80D auf.

Fig. 8b zeigt eine Seitenansicht der KRF 80. Die Muffe 85 weist einen Außendurchmesser 80E, einen Innendurchmesser 80F, sowie eine Höhe 80G auf, wobei die Muffenhöhe 80G von einem Vorsprung 86 des Innendurchmessers bis zum oberen Ende der Muffe 85 gemessen wird. Die Gesamthöhe 80H des KRF-Formteils 80 wird vom unteren Ende des Fußes 83 bis zum oberen Ende der Muffe 85 gemessen. Der Stutzen 82 ist unter dem Neigungswinkel $\alpha$ so an das Rohr 81 angesetzt, daß der Außenumfang des Stutzens 82 stufenlos in die Außenseite des Fußteils 83 übergeht und das Fußteil 83 einen Außendurchmesser 80K besitzt. Der Stutzen 82 weist in Bezug auf das Rohr 81 einen maximalen Überstand 80J auf.

Fig. 8c zeigt eine Druntersicht der KRF 80.

In Tabelle 3 sind für die in den Figuren 8a, 8b und 8c gezeigte KRF 80 mögliche Bauteil-Abmessungen, entsprechend den Bezugszeichen 80A, 80B, 80C, 80D, 80E, 80F, 80G, 80H, 80J, 80K und $\alpha$, aufgelistet. Diese Ab-

messungen stellen bevorzugte Maße dar, die nach dem erfindungsgemäßen Verfahren realisierbar sind. Alle Zahlenangaben in Tabelle 3, außer dem in Grad angegebenen Neigungswinkel $\alpha$, sind in Millimeter angegeben. Der in Tabelle 3 für den Rohraußendurchmesser 80B und den Fußaußendurchmesser 80K angegebene Wert von 96 mm entspricht DN 80, der für den Stutzenaußendurchmesser 80D angegebene Wert von 117 mm entspricht DN 100. Bei der Herstellung entsprechender Gießformen ist mit einer Gesamtschwindung des Scherbens beim Trocknen und beim Brennen zu rechnen, die typischerweise im Bereich von 9,0 % für die Querschwindung und bei 9,5 % für die Längsschwindung liegen.

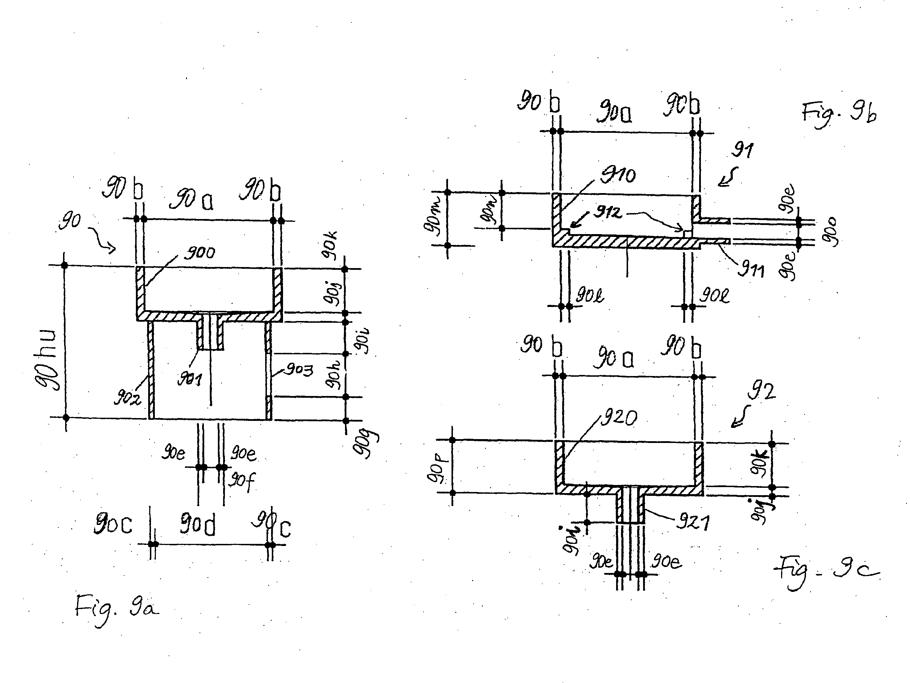

Die Figuren 9a, 9b und 9c zeigen erfindungsgemäße monolithische Kondensatauffangschalen 90 bis 92. Fig. 9a zeigt einen Schnitt durch die Kondensatauffangschale 90 mit einer Gesamthöhe 90hu. Sie weist eine kreisrunde Wanne 900 mit einem Innendurchmesser 90a und einer Seitenwand mit einer Innenhöhe 90k und einer Wandstärke 90b auf, wobei die Wanne 900 mittig in ihrem Boden mit einer Dicke 90j ein Abflußrohr 901 der Länge 90i besitzt. In die Wanne 900 kann ein erstes, d.h. unterstes Kaminrohr eines Schornsteins gestellt werden. Der Boden der Wanne 900 weist an seiner Oberseite eine geringe Neigung in Richtung des Abflußrohrs 901 auf, so daß in der Wanne anfallendes Kondensat in Richtung des Abflußrohrs 901 fließt. Das Abflußrohr 901 hat einen Innendurchmesser 90f und eine Rohrwandstärke 90e. Die Wanne 900 wiederum sitzt auf einem Zylinder 902 mit einem Innendurchmesser 90d und einer Zylinderwandstärke 90c, wobei sich in der Zylinderwand eine Öffnung 903 mit einem Durchmesser 90h befindet. Die Öffnung weist einen unteren Abstand 90g zum Fuß des Zylinders 902 und einen oberen Abstand 90i zum Boden der Wanne 900. Die Wanne 900, das Abflußrohr 901 und der Zylinder 902 sind zueinander so angeordnet, daß ihre Mittelachsen zusammenfallen.

Fig. 9b zeigt einen Schnitt durch die Kondensatauffangschale 91 mit einer Gesamthöhe 90m. Sie besteht aus einer kreisrunden Wanne 910 mit einem Innendurchmesser 90a und einer Seitenwand mit einer Wandstärke 90b. An der durch den Boden und die Seitenwand der Wanne 910 gebildeten Innenecke ist ein Ring 912 mit einem rechteckigen Querschnitt angeordnet. Der Ring 912 hat eine Breite 90l. Auf dem Ring 912 kann ein erstes, d.h. unterstes Kaminrohr eines Schornsteins gestellt werden. An einer Stelle weist die Seitenwand der Wanne 910 eine Öffnung auf. Da der Ring 912 an derselben Stelle unterbrochen ist und der Boden der Wanne 910 an seiner Oberseite eine geringe Neigung in Richtung der Öffnung aufweist, kann in der Wanne 910 anfallendes Kondensat aus dem Schornstein zu der Öffnung fließen. Außen an der Wanne 910 ist in Fortsetzung der Öffnung ein Abflußrohr 911 angeordnet, das einen Innendurchmesser 90o und eine Wandstärke 90e aufweist.

Fig. 9c zeigt einen Schnitt durch die Kondensatauffangschale 92. Sie entspricht im wesentlichen der in Fig. 9a beschriebenen Kondensatauffangschale 90, mit dem Unterschied, daß die Wanne 920 der Kondensatauffangschale 92 auf keinem Zylinder angeordnet ist. Außer der Wanne 920 weist die Kondensatauffangschale 92 also nur noch ein Abflußrohr 921 auf. Die kreisrunden Wanne 920 besitzt einen Innendurchmesser 90a und eine Seitenwand mit einer Innenhöhe 90k und einer Wandstärke 90b. Mittig in dem Wannenboden mit der Dicke 90j sitzt das Abflußrohr 921. Bezüglich der Abmessungen und der Funktion der Wanne 920 und des Abflußrohres 921 gilt das unter Fig. 9a Gesagte.

In den Tabellen 4a und 4b sind für die in den Figuren 9a, 9b und 9c gezeigten Kondensatauffangschale 90, 91, 92 mögliche Bauteil-Abmessungen, entsprechend den Bezugszeichen 90a, 90b, 90c, 90d, 90hu, 90e, 90f, 90g, 90h, 90i, 90j, 90k, 901, 90m, 90n, 90o und 90p, aufgelistet. Diese Abmessungen stellen bevorzugte Maße dar, die nach dem erfindungsgemäßen Verfahren realisierbar sind. Die erste Spalte der Tabelle 4a mit der Bezeichnung "TYP" gibt die Rohr-Nennweite DN eines Standard-Kaminrohrs an, das mit einer entsprechend dimensionierten Kondensatauffangschale verwendet werden kann. Alle anderen Zahlenangaben in den Tabellen 4a und 4b sind in Millimeter angegeben.

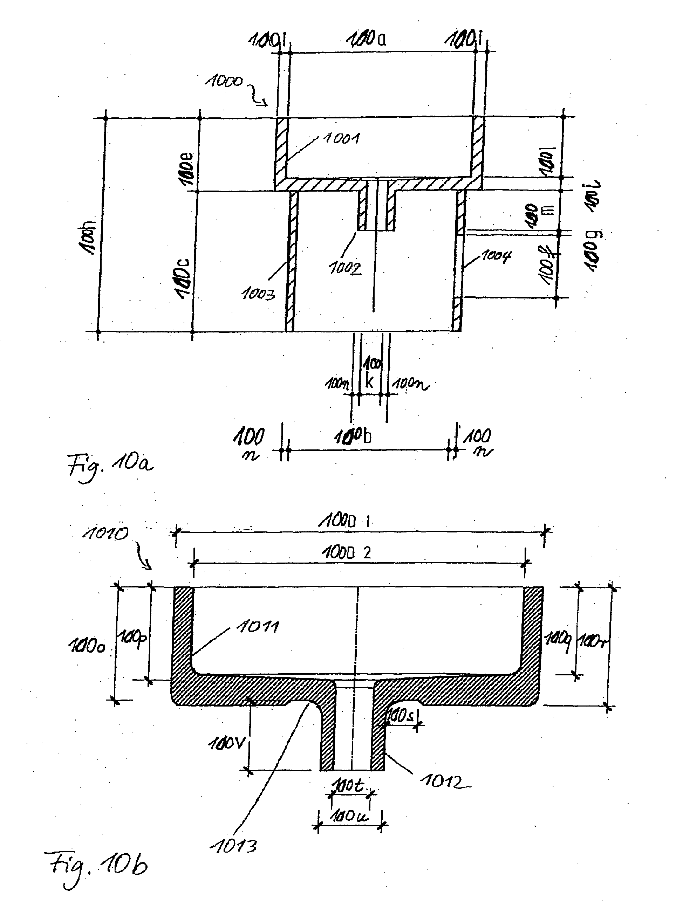

Die Figuren 10a und 10b zeigen erfindungsgemäße monolithische Kondensatauffangschalen 1000 und 1010. Fig. 10a zeigt einen Schnitt durch die Kondensatauffangschale 1000, die im wesentlichen ähnlich zu der in Fig. 9a gezeigten Kondensatauffangschale 90 konstruiert ist. Die monolithisch gegossene Kondensatauffangschale 1000 besitzt eine Gesamthöhe 100h und kann in drei Bauteile gegliedert werden: eine Wanne 1001, ein Abflußrohr 1002 und ein Standzylinder 1003. Die kreisrunde Wanne 1001 mit einem Innendurchmesser 100a besteht aus einem Bodenstück mit einer Dicke 100i und einer auf dem Bodenstück angesetzten ringförmigen Seitenwand mit einer Innenhöhe 100l und einer Wandstärke 100i. Die Höhe 100e der Wanne wird von der Unterkante des Bodens bis zur Oberkante der Seitenwand gemessen.

Die Wanne 1001 besitzt mittig in ihrem Boden ein Abflußrohr 1002 der Länge 100m. In die Wanne 1001 kann ein erstes, d.h. unterstes Kaminrohr eines Schornsteins gestellt werden. Der Boden der Wanne 1001 weist an seiner Oberseite eine geringe Neigung in Richtung des Abflußrohrs 1002 auf, so daß in der Wanne anfallendes Kondensat in Richtung des Abflußrohrs 1002 fließt. Das Abflußrohr 1002 hat einen Innendurchmesser 100k und eine Rohrwandstärke 100n. Die Wanne 1001 wiederum sitzt auf dem Zylinder 1003 der Höhe 100c, mit einem Innendurchmesser 100b und einer Zylinderwandstärke100n, wobei sich in der Zylinderwand eine Öffnung 1004 mit einem Durchmesser 100f befindet. Die Öffnung beginnt in einem Abstand 100g zum unteren Ende des Abflußrohrs 1002. Die Wanne 1001, das Abflußrohr 1002 und der Zylinder 1003 sind zueinander so angeordnet, daß ihre Mittelachsen zusammenfallen.

In der Tabelle 5 sind für die in der Figur 10a gezeigte Kondensatauffangschale 1000 mögliche Bauteil-Abmessungen, entsprechend den Bezugszeichen 100a, 100b, 100c, 100e, 100f, 100g, 100h, 100i, 100k, 1001, 100m, 100n, aufgelistet. Diese Abmessungen stellen bevorzugte Maße dar, die nach dem erfindungsgemäßen Verfahren realisierbar sind. Die erste Spalte der Tabelle 5 mit der Bezeichnung

"TYP" gibt die Rohr-Nennweite DN eines Standard-Kaminrohrs an, das mit einer entsprechend dimensionierten Kondensatauffangschale verwendet werden kann. Alle anderen Zahlenangaben in der Tabelle 5 sind in Millimeter angegeben.

Fig. 10b zeigt einen Schnitt durch die Kondensatauffangschale 1010, die im wesentlichen ähnlich zu der in Fig. 9c gezeigten Kondensatauffangschale 92 konstruiert ist. Die monolithisch gegossene Kondensatauffangschale 1010 kann in zwei Bauteile gegliedert werden: eine Wanne 1011 und ein Abflußrohr 1012. Die kreisrunde Wanne 1011 besteht aus einem Bodenstück und einer auf dem Bodenstück angesetzten ringförmigen Seitenwand mit einer Innenhöhe 100q und einer Wandstärke 100i. Durch die Abmessungen der Seitenwand ist der Wanne 1011 ein Innendurchmesser 100D2 und ein Außendurchmesser 100D1 zugeordnet. Die Wanne 1010 besitzt mittig in ihrem Bodenstück ein Abflußrohr 1012 der Länge 100v. In die Wanne 1011 kann ein erstes, d.h. unterstes Kaminrohr eines Schornsteins gestellt werden. Der Boden der Wanne 1001 weist an seiner Oberseite eine geringe Neigung in Richtung des Abflußrohrs 1012 auf, so daß in der Wanne anfallendes Kondensat in Richtung des Abflußrohrs 1012 fließt. Die besagte Neigung ist durch die lichte Höhe der Wanne 1011 bestimmt: am Innenumfang der Seitenwand weist die Wanne 1011 eine äußere lichte Höhe 100q auf, am Mündungstrichter des Abflußrohrs 1012 weist die Wanne 1011 eine innere lichte Höhe 100p auf, wobei gilt: 100p ist größer oder gleich 100q.

Die Gesamthöhe 100r der Wanne 1011 wird im Bereich des Außenumfangs der Seitenwand bestimmt und von der Unterkante des Bodens zu der Oberkante der Seitenwand gemessen. Das Abflußrohr 1012 hat einen Innendurchmesser 1007 und eine Rohrwandstärke 100u. Die Wanne 1011 und das Abflußrohr 1012 sind zueinander so angeordnet, daß ihre Mittelachsen zusammenfallen. An der Unterseite des Bodenstücks weist die Wanne 1011 im Bereich des Außenumfangs des Abflußrohrs 1012 eine ringförmige Einbuchtung 1013 mit einer Breite 100s auf. Der Abstand 100o von der Unterkante der Einbuchtung bis zur Oberkante der Seitenwand ist geringer als die Gesamthöhe 100r der Wanne und bildet ein Maß für die Stärke der Einbuchtung 1013.

In der Tabelle 6 sind für die in der Figur 10b gezeigte Kondensatauffangschale 1010 mögliche Bauteil-Abmessungen, entsprechend den Bezugszeichen 100D1, 100D2, 100o, 100p, 100q, 100r, 100s, 100t, 100u, 100v, aufgelistet. Diese Abmessungen stellen bevorzugte Maße dar, die nach dem erfindungsgemäßen Verfahren realisierbar sind. Die erste Spalte der Tabelle 6 mit der Bezeichnung "TYP" gibt die Rohr-Nennweite DN eines Standard-Kaminrohrs an, das mit einer entsprechend dimensionierten Kondensatauffangschale verwendet werden kann. Alle anderen Zahlenangaben in der Tabelle 6 sind in Millimeter angegeben.

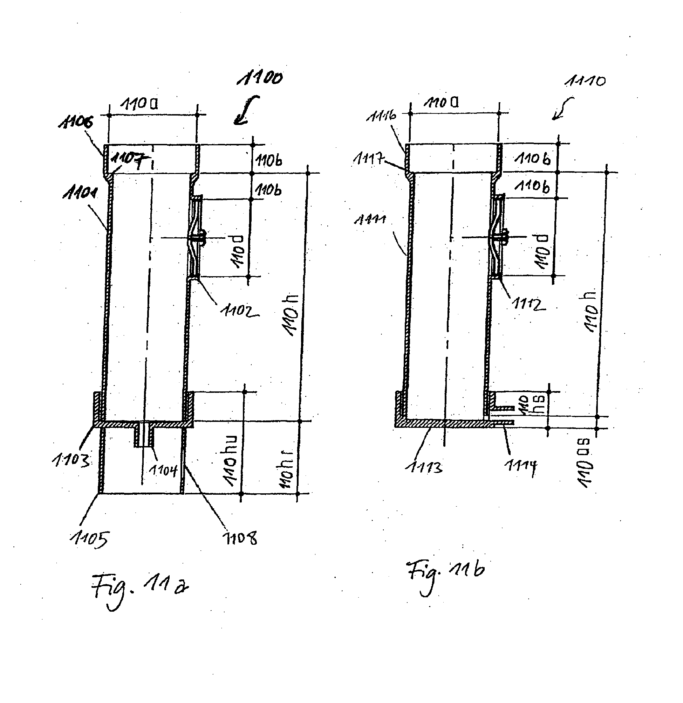

Die Figuren 11 a und 11 b zeigen Bauteile 1100 und 1110, die sich aus erfindungsgemäßen monolithischen Formstücken zusammensetzen. Fig. 11a zeigt einen Schnitt durch das Bauteil 1100, bestehend aus einem monolithischen Rohrstück 1101 mit Rohrverbindungsmuffe 1106, einer Revisionstür 1102, einer monolithischen Kondensatauffangschale 1103 mit Wanne und vertikalem Abflußrohr 1104 und einem monolithischen Standzylinder 1105 mit einer seitlichen Öffnung 1108. Die Rohrverbindungsmuffe 1106 mit einem Muffeninnendurchmesser 110a und einer Höhe 110b der Muffe 1106, gemessen von einem Standring 1107 der Muffe 1106 zu der Oberkante des Muffe 1106, sitzt am oberen Ende des Rohres 1101. Die Revisionstür 1102 mit einem Durchmesser 110d sitzt in der Seitenwand des Rohres 1101. Die Lage der Revisionstür 1102 wird durch den kleinsten Abstand 110b des Umfangs der Revisionstür 1102 von dem Standring 1107 der Muffe 1106 festgelegt.

Im unteren Bereich des Rohres 1101 ist die Kondensatauffangschale 1103 angeordnet, deren Lage durch den Abstand 110h von der Oberkante des Wannenbodens zum Standring 1107 der Muffe 1106 festgelegt ist. Unterhalb der Kondensatauffangschale 1103 bildet der Standzylinder 1105 den unteren Abschluß des Formstücks 1100. Die Dimension des Standzylinders 1105 ist durch den Abstand 100hr von der Oberkante des Wannenbodens zum unteren Ende des Standzylinders 1105 festgelegt. Die Dimension der Kondensatauffangschale 1103 ist durch den Abstand 110hu von der Oberkante der Seitenwand der Wanne 1103 zum unteren Ende des Standzylinders 1105 definiert.

Fig. 11b zeigt einen Schnitt durch das Bauteil 1110, bestehend aus einem monolithischen Rohrstück 1111 mit Rohrverbindungsmuffe 1116, einer Revisionstür 1112 und einer monolithischen Kondensatauffangschale 1113 mit Wanne und seitlichem Abflußrohr 1114. Das zu Fig. 11a Gesagte gilt in Bezug auf die Muffe 1116 mit Standring 1117 und die Revisionstür 1112 analog. Unterschiede ergeben sich bei der Kondensatauffangschale 1113, die am unteren Ende des Rohres 1111 angeordnet ist. Der Abstand 110as von der Mittelachse des unter 90˚ vom Rohr 1111 seitlich abgehenden Abflußrohrs 1114 zu der Unterkante des Wannenbodens gibt die Dimension der Kondensatauffangschale 1113 an. Die Gesamthöhe der Kondensatauffangschale 1113 wird durch den Abstand 110hs vom oberen Rand der Seitenwand der Wanne zu der Unterkante des Wannenbodens definiert. Im Gegensatz zu dem Formstück 1100 der Fig. 11 a wird bei dem Formstück 1110 der vorliegenden Figur 11b die Gesamthöhe 110h des Rohres 1111 von der Mittelachse des Abflußrohrs 1114 zum Standring 1117 der Muffe 1116 gemessen.

In einer alternativen Ausführungsform werden die in Fig. 11a und 11b dargestellten Kaminbauteile erfindungsgemäß als Monolithen hergestellt, die alle Formteile bis auf die Revisionstüren 1102 bzw. 1112 in einem durchgehenden Stück enthalten.

In der Tabelle 7 sind für die in den Figuren 11 a und 11 b gezeigten Formstücke 1100 und 1110 mögliche Bauteil-Abmessungen, entsprechend den Bezugszeichen 110a, 110d, 110h, 110hu, 110hr, 110hs, 110as, 110b, aufgelistet. Diese Abmessungen stellen bevorzugte Maße dar, die nach dem erfindungsgemäßen Verfahren realisierbar sind. Die erste Spalte der Tabelle 7 mit der Bezeichnung "TYP" gibt die Rohr-Nennweite DN eines Standard-Kaminrohrs an, das mit einem entsprechend dimensionierten Formstück verwendet werden kann, die z.B. in die Rohrverbindungsmuffe 1106 und 1116 eingepaßt werden kann. Alle anderen Zahlenangaben in der Tabelle 7 sind in Millimeter angegeben.

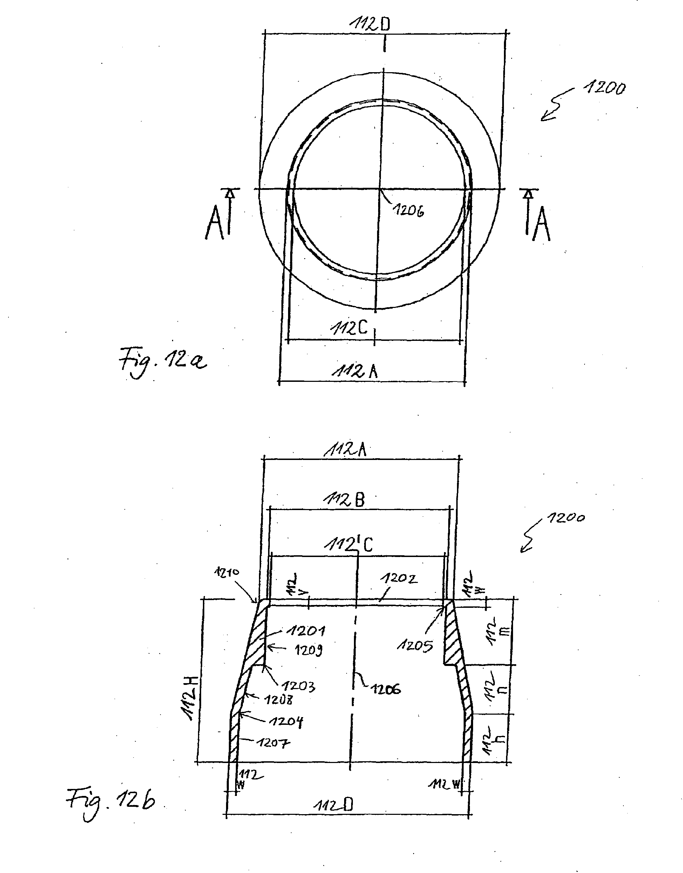

Die Figuren 12a und 12b zeigen eine erfindungsgemäße monolithische Abströmhaube 1200 aus Keramik. Fig. 12a zeigt eine Draufsicht der Abströmhaube 1200 entlang seiner Symmetrieachse 1206. Die Abströmhaube 1200 ist ein zylindrisches, sich nach oben verjüngender Formteil mit einem maximalen Außendurchmesser 112D am Fuß der Abströmhaube 1200 und einem minimalen Außendurchmesser 112A am oberen Ende der Abströmhaube 1200. In der Oberseite der Abströmhaube 1200 befindet sich eine kreisförmige Öffnung mit einem Durchmesser 112C.

Fig. 12b zeigt einen Schnitt der Abströmhaube 1200 entlang der in Fig. 12a angedeuteten Schnittebene A-A. Gemäß der Schnittzeichnung weist das Profil der Abströmhaube 1200 vier unterschiedliche Abschnitte auf: einen unteren vertikalen Abschnitt 1207 mit gleichbleibender Wandstärke 112w und einer Höhe 112h, daran nach oben anschließend einen zweiten Abschnitt 1208 mit nach oben abnehmendem Außendurchmesser und gleichbleibender Wandstärke 112w über eine Höhe 112n, daran nach oben anschließend einen dritten Abschnitt 1209 mit nach oben abnehmendem Außendurchmesser und gleichbleibendem Innendurchmesser 112B über eine Höhe 112m, sowie einen vierten waagrechten Abschnitt 1210, der einen Ring darstellt, mit einer Dicke 112w an seinem Außenumfang und einer Dicke 112v an seinem Innenumfang. Innerhalb des Rings 1210 befindet sich die Abströmöffnung 1202.

Zwischen dem untersten Abschnitt 1207 und dem zweiten Abschnitt 1208 liegt eine Kante 1204, hervorgerufen durch die unterschiedliche Neigung der beiden Abschnitte 1207, 1208. Zwischen dem zweiten Abschnitt 1208 und dem dritten Abschnitt 1209 bildet das Profil an dem Innenumfang der Abströmhaube 1200 einen Vorsprung 1203.

In einer alternativen Ausgestaltung der Abströmhaube 1200, die nicht dargestellt ist, läuft die Kante 1208 mit der Höhe 112n bis an die obere Kante 1205 weiter. Die Kante 1208 läuft dann parallel zur Außenkante; die Kanten 1203, 1209 und das Element 1201 entfallen bei dieser Variante.

In der Tabelle 8 sind für die in den Figuren 12a und 12b gezeigte Abströmhaube 1200 mögliche Bauteil-Abmessungen, entsprechend den Bezugszeichen 112A, 112B, 112C, 112D, 112v, 112w, 112m, 112n, 112h, 112H, aufgelistet. Diese Abmessungen stellen bevorzugte Maße dar, die nach dem erfindungsgemäßen Verfahren realisierbar sind. Die erste Spalte der Tabelle 8 mit der Bezeichnung "TYP" gibt die Rohr-Nennweite DN eines Standard-Kaminrohrs an, das mit einer entsprechend dimensionierten Abströmhaube verwendet werden kann. Zum Beispiel kann ein Standard-Kaminrohr der Rohr-Nennweite DN durch eine Abströmhaube mit den entsprechenden Maßen abgedeckt werden. Alle anderen Zahlenangaben in der Tabelle 8 sind in Millimeter angegeben.

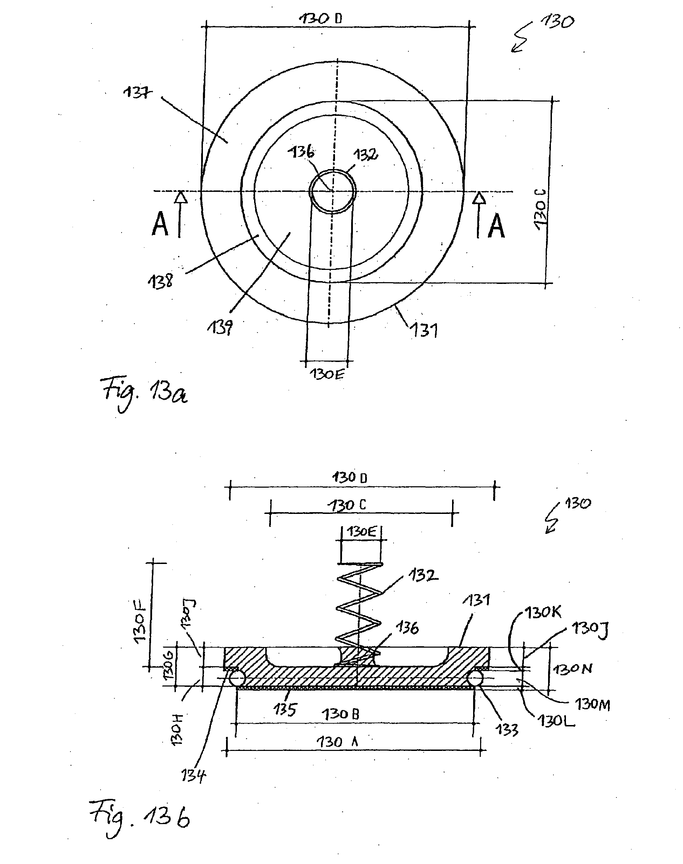

Die Figuren 13a und 13b zeigen eine erfindungsgemäße monolithische Putztür 130 aus Keramik. Fig. 13a zeigt eine Ansicht der Außenseite der Putztür 130. Als Außenseite wird die Seite der Putztür 130 bezeichnet, die nach Einsetzen der Putztür 130 in ein Kaminbauteil vom Schornstein abgewendet ist. Die Putztür 130 weist eine kreisrunde Keramikscheibe 131 mit einem Außendurchmesser 130D auf. Die Keramikscheibe 131 besitzt an ihrer Außenseite eine profilierte Oberfläche mit vier Zonen: entlang des Scheibenrandes erstreckt sich eine flache äußere Ringzone 137 mit einem Außendurchmesser 130D und einem Innendurchmesser 130C. Daran anschließend erstreckt sich eine mittlere Ringzone 138 mit einem gekrümmten Profil. Daran anschließend erstreckt sich eine flache innere Ringzone 139 mit einem Innendurchmesser 130E. Im Mittelpunkt der Scheibe 131 sitzt ein Knopf 136, an dem eine Spiralfeder 132 befestigt werden kann.

Fig. 13b zeigt einen Schnitt der Putztür 130 entlang der in Fig. 13a angedeuteten Schnittebene A-A. An der Innenseite der Keramikscheibe 131 ist entlang des Scheibenumfangs ein Isolierring 134 mit einer Dicke 130K angebracht. Die übrige Fläche der Innenseite der Keramikscheibe 131 wird von einer kreisrunden Isolierscheibe 135 mit einem Durchmesser 130B und einer Dicke 130L eingenommen. Zwischen dem Isolierring 134 und der Isolierscheibe 135 verläuft ein Dichtring 133 der Dicke 130M. Entlang des Scheibenumfangs der Keramikscheibe 131 weist die Keramikscheibe 131 eine Dicke 130J auf. Dieses Maß entspricht der Höhe 130J des Knopfs 136. Zusammen mit den Isolierschichten 134, 135 und dem Dichtring 133 weist die Putztüre entlang ihres Umfangs eine Gesamtdicke 130N auf. Der Isolierring 134 und der Dichtrings 133 zusammen weisen eine Dicke 130H auf, in Verbindung mit der Keramikscheibe eine Dicke 130G. Die Spiralfeder 132 weist eine Höhe 130F auf.

In der Tabelle 9 sind für die in den Figuren 13a und 13b gezeigte Putztür 130 mögliche Bauteil-Abmessungen, entsprechend den Bezugszeichen 130A, 130B, 130C, 130D, 130E, 130F, 130G, 130H, 130J, 130K, 130L, 130M, 130N, aufgelistet. Diese Abmessungen stellen bevorzugte Maße dar, die nach dem erfindungsgemäßen Verfahren realisierbar sind. Die erste Spalte der Tabelle 9 mit der Bezeichnung "TYP" gibt die Rohr-Nennweite DN eines Standard-Kaminrohrs an, in dem eine entsprechend dimensionierte Putztür verwendet werden kann. Alle anderen Zahlenangaben in der Tabelle 9 sind in Millimeter angegeben.

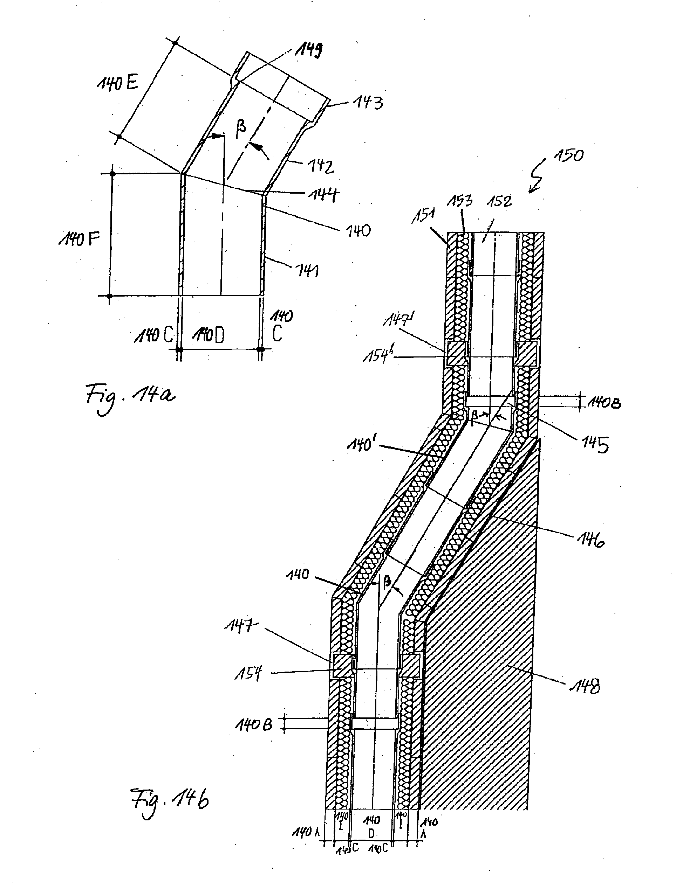

Die Figuren 14a und 14b zeigen eine erfindungsgemäße monolithische Schornsteinschrägführung 140. Fig. 14a zeigt einen Schnitt der Schornsteinschrägführung 140 entlang ihrer Rohrachse. Die Schornsteinschrägführung 140 gliedert sich in einen vertikalen Teil 141 und einen schrägen Teil 142, die in einer schrägen Schnittebene 144 aneinandergesetzt sind. Der schräge Teil 142 ist um einen Winkel β gegenüber der Lotrechten geneigt. Analog zu einem Standard-Kaminrohr weist auch die Schornsteinschrägführung 140 an ihrem oberen Ende eine Rohrverbindungsmuffe 143 mit einem Muffenvorsprung 149 auf. Die Schornsteinschrägführung 140 weist einen Innendurchmesser 140D und eine Wandstärke 140C auf. Die Länge 140F des vertikalen Teils 141 ist als maximale Seitenlänge an der Außenseite des vertikalen Teils 141 definiert, d.h. als maximaler Abstand zwischen der Unterkante des vertikalen Teils 141 und der schrägen Schnittebene 144. Die Länge 140E des schrägen Teils 142 ist als maximale Seitenlänge an der Außenseite des schrägen Teils 141 definiert, d.h. als maximaler Abstand zwischen der schrägen Schnittebene 144 und dem Muffenvorsprung 149. In einer alternativen Ausführung kann die Schornsteinschrägführung 140 einen unteren schrägen Teil und einen oberen vertikalen Teil mit einer Rohrverbindungsmuffe aufweisen.

Fig. 14b zeigt zwei alternative Ausführungen 140, 140' einer Schornsteinschrägführung in einer beispielhaften Einbausituation. Fig. 14b zeigt einen Schnitt durch einen dreischaligen Schornstein 150 entlang seiner Rohrmittelachse. Der Schornstein 150 wird durch die erste Schornsteinschrägführung 140 von der Lotrechten um den Winkel β in die Schräge und durch die zweite, darüberliegende Schornsteinschrägführung 140' von der Schrägen um den Winkel β zurück in die Lotrechte geführt. Aus statischen Erfordernissen ist unterhalb des schräggeführten Abschnitts des Schornsteins 150 eine standsichere Untermauerung 148 vorgesehen, auf der eine Trennschicht 146 angebracht ist.

Der Schalenaufbau des Schornsteins 150 ist in seinem gesamten Verlauf gleich: außen ein Mantelstein 151 mit einer Wandstärke 140A und innen ein Rauchrohr 152 mit einem Innendurchmesser 140D und einer Wandstärke 140C auf. Zwischen dem Mantelstein 151 und dem Rauchrohr 152 ist ein ringförmiger Hohlraum mit einer Dicke 140I ausgebildet, in dem sich eine Isolierschicht 153 befindet. Die Rohrverbindungsmuffen der Rauchrohre weisen eine gleiche Höhe 140B auf. Um den Fuß der ersten Schornsteinschrägführung 140 ist eine ersten Betonplatte 154 angebracht, die mit einem Leichtmörtelmantel 147 umgeben ist. Der Leichtmörtelmantel 147 hat die Funktion, die Betonplatte 154 zu fixieren und zugleich mit seiner Wärmedämmeigenschaft thermisch zu isolieren. Um die Muffe der zweiten Schornsteinschrägführung 140' ist eine zweite Betonplatte 154' angeordnet, die von einem zweiten Leichtmörtelmantel 147' umschlossen ist Auf diese Weise wird die Rohrsäule des Schornsteins 150 im Verlauf der Schornsteinschrägführung fixiert.

Fig. 14c zeigt eine Draufsicht der Betonplatte 154 mit der Kantenlänge 140H. Die viereckige Betonplatte 154 weist in den Eckbereichen vier Löcher 155 auf, die für die Weiterführung einer Hinterlüftung im Kamin vorgesehen sind. Fig. 14d zeigt einen detaillierten Schnitt durch die Betonplatte 154 mit einem dadurch eingefaßten Muffenrohr 152.

In der Tabelle 10 sind für die in den Figuren 14a, 14b, 14c und 14d gezeigte Schornsteinschrägführung 140 und den Schornstein 150 mögliche Bauteil-Abmessungen, entsprechend den Bezugszeichen 140A, 140B, 140C, 140D, 140E, 140F, 140H, 140I, β, aufgelistet. Diese Abmessungen stellen bevorzugte Maße dar, die nach dem erfindungsgemäßen Verfahren realisierbar sind. Die erste Spalte der Tabelle 10 mit der Bezeichnung "TYP" gibt die Rohr-Nennweite DN eines Standard-Kaminrohrs an, mit dem eine entsprechend dimensionierte Schornsteinschrägführung verwendet werden kann. Alle anderen Zahlenangaben in der Tabelle 10, außer dem in Grad angegebenen Neigungswinkel β, sind in Millimeter angegeben.

Die Figuren 15a und 15b zeigen eine erfindungsgemäße monolithische Blende 160. Fig. 15a zeigt eine Ansicht der Blende 160. Die Blende 160 hat die Kantenlängen 160A und 160D und weist in ihrer Mitte eine kreisrunde Öffnung 162 auf, durch die z.B. ein Rauchrohr an einen Schornstein angeschlossen werden kann. Entlang der Außenkanten weist die Blende 160 Fasen 164 auf, so daß die bei Montage sichtbare ebene Oberfläche 163 der Blende 160 die Kantenlängen 160B und 160C aufweist. Die Öffnung 162 weist einen lichten Durchmesser 160E auf. In den vier Ecken der Blende 160 befinden sich in einem Abstand 160G von den Außenkanten vier Löcher zur Befestigung der Blende mittels Schrauben, Nägeln, etc, wobei die Löcher einen Durchmesser 160H aufweisen.

Fig. 15b zeigt einen Schnitt durch die Blende 160 entlang der in Fig. 15a angedeuteten Schnittebene A-A. Die Oberfläche 163 weist eine Dicke 160K auf. Die zur Aufnahme eines Rauchrohrendes dienende, entlang des Randes der Öffnung 162 verlaufende Nut mit einer Tiefe 160J besteht aus einem inneren Ring 164 mit einem Innendurchmesser 160E, einem äußeren Ring 166 mit einem Außendurchmesser 160F sowie einem dazwischenliegenden Ringspalt 165, der der Aufnahme des Rauchrohrendes dient. Auf der Rückseite der Blende 160 ist entlang des Außenumfangs des äußeren Rings 166 ein Dichtungsband 161 angeordnet, um ein Austreten von Abgasen zu verhindern.

In der Tabelle 12 sind für die in den Figuren 15a und 15b gezeigte Blende 160 Bauteil-Abmessungen, entsprechend den Bezugszeichen 160A, 160B, 160C, 160D, 160E, 160F, 160G, 160H, 160J, 160K aufgelistet. Diese Abmessungen stellen bevorzugte Maße dar, die nach dem erfindungsgemäßen Verfahren realisierbar sind. Alle Zahlenangaben in der Tabelle 12 sind in Millimeter angegeben, die Zahlenangabe für das Bezugszeichen 160H ist als Durchmesser zu verstehen.

Tabelle 1

| TYP | d | C | h | m | a | f |
|-----|-----|-----|-----|--------|-----|-----|
| 80 | 80 | 8 | 360 | 80, 100 | 106 | 6 |

(fortgesetzt)

| TYP | d | C | h | m | a | f |
|-----|-----|---|------|----------|-----|-----|
| 100 | 100 | 8 | 500  | 100, 120 | 126 | 6 |
| 120 | 120 | 8 | 660  | 120 ,140 | 146 | 6 |
| 140 | 140 | 8 | 1000 | 140, 160 | 166 | 6 |
| 160 | 160 | 8 | 1400 | 160,180  | 186 | 6 |
| 180 | 180 | 8 | 1500 | 180,200  | 206 | 6 |
| 200 | 200 | 8 |      | 200,226  | 226 | 6 |
| 250 | 250 | 9 |      | 250,276  | 276 | 6,5 |

Tabelle 2

| 70A | 70B | 70C | 70D | 70E | 70F |
|-----|-----|-----|-----|-----|-----|
| 80  | 660 | 100 | 20 | 60 | 110 |
| 100 | 660 | 120 | 20 | 60 | 120 |
| 120 | 660 | 120 140 | 20 60 | 60 | 120 130 |
| 140 | 660 | 140 | 20 60 | 60 | 130 |
| 160 | 660 | 160 | 20 60 | 60 | 140 |
| 180 | 660 | 180 | 20 60 | 60 | 150 |
| 200 | 660 | 200 | 20 60 | 60 | 160 |
| 250 | 660 | 200 250 | 20 60 | 60 | 160 185 |

Tabelle 3

| 80A | 80B | 80C | 80D | 80E | 80F | 80G | 80H | 80J | 80K | $\alpha$ |
|-----|-----|-----|-----|-----|-----|-----|-----|-----|-----|---|
| 80  | 96  | 100 | 117 | 118 | 105 | 60  | 260 | 38  | 96  | 5° |

Tabelle 4a

| TYP | 90 a | 90b | 90c | 90d | 90 hu |
|-----|---------|-----|-----|---------|-----|
| 80  | 104-106 | 12 | 8 | 76-84   | 240 |
| 100 | 124-126 | 12 | 8 | 96-104  | 240 |
| 120 | 144-146 | 12 | 8 | 116-124 | 240 |
| 140 | 164-166 | 12 | 8 | 136-144 | 240 |
| 160 | 184-186 | 12 | 8 | 155-165 | 240 |
| 180 | 204-206 | 12 | 8 | 175-185 | 240 |
| 200 | 224-226 | 12 | 8 | 194-206 | 240 |
| 250 | 277-278 | 12 | 9 | 244-256 | 240 |

Tabelle 4b

| 90e | 90f | 90g | 90h | 90i | 90j | 90k | 90l | 90m | 90n | 90o | 90p |
|-----|-----|-----|-----|-----|-----|-----|-----|-----|-----|-----|-----|
| 8 | 24 | 37 | 70 | 50 | 15 | 60 | 12 | 70 | 55 | 25 | 75 |

Tabelle 5

| Typ | 100a | 100 b | 100 c | 100 e | 100 f | 100 g | 100 h | 100 i | 100 k | 100 l | 100 m | 100 n |
|-----|------|-------|-------|-------|-------|-------|-------|-------|-------|-------|-------|-------|
| 80 | ≥ 100 | 80 | ≥ 163 | ≥ 75 | 70 | 5 | 240 | ≥ 12 | 25 | ≥ 60 | 45 | 8 |
| 100 | ≥ 120 | 100 | ≥ 163 | ≥ 75 | 70 | 5 | 240 | ≥ 12 | 25 | ≥ 60 | 45 | 8 |
| 120 | ≥ 140 | 120 | ≥ 163 | ≥ 75 | 70 | 5 | 240 | ≥ 12 | 25 | ≥ 60 | 45 | 8 |
| 140 | ≥ 160 | 140 | ≥ 163 | ≥ 75 | 70 | 5 | 240 | ≥ 12 | 25 | ≥ 60 | 45 | 8 |
| 160 | ≥ 180 | 160 | ≥ 163 | ≥ 75 | 70 | 5 | 240 | ≥ 12 | 25 | ≥ 60 | 45 | 8 |
| 180 | ≥ 200 | 180 | ≥ 163 | ≥ 75 | 70 | 5 | 240 | ≥ 12 | 25 | ≥ 60 | 45 | 8 |
| 200 | ≥ 235 | 200 | ≥ 163 | ≥ 75 | 70 | 5 | 240 | ≥ 12 | 25 | ≥ 60 | 45 | 8 |
| 250 | ≥ 285 | 250 | ≥ 163 | ≥ 75 | 70 | 5 | 240 | ≥ 12 | 25 | ≥ 60 | 45 | 8 |

Tabelle 6

| Typ | 100 D1 | 100 D2 | 100 o | 100 p | 100 q | 100 r | 100 s | 100 t | 100 u | 100 v |
|-----|--------|--------|-------|-------|-------|-------|-------|-------|-------|-------|
| 80 | 131±3 | 107±3 | | | | | | | | |
| 100 | 151±3 | 127±3 | | | | | | | | |
| - 120 | 171±3 | 147±3 | | | | | | | | |
| 140 | 191±3 | 167±3 | 72±2 | 60-2 | 55-1 | $75^{+3}_{-0}$ | 20 | 24±1 | 39±1 | 45±2 |
| 160 | 211±3 | 187±3 | | | | | | | | |
| 180 | 231±3 | 207±3 | | | | | | | | |
| 200 | 251±3 | 227±3 | | | | | | | | |

Tabelle 7

| TYP | 110 a | 110 d | 110 h | 110 hu | 110 hr | 110 hs | 110 as | 110 b |
|-----|-------|-------|-------|--------|--------|--------|--------|-------|
| 80 | 104-106 | 78-82 | | 240 | ≥175 | ≥ 70 | 20 | |
| 100 | 124-126 | 98-102 | 360 | 240 | ≥175 | ≥ 70 | 20 | |
| 120 | 144-146 | 118-122 | 660 | 240 | ≥175 | ≥ 70 | 20 | |
| 140 | 164-166 | 138-142 | 1000 | 240 | ≥175 | ≥ 70 | 20 | 60 |
| 160 | 184-186 | 157-163 | 1000 | 240 | ≥175 | ≥ 70 | 20 | |
| 180 | 204-206 | 177-183 | 1400 | 240 | ≥175 | ≥ 70 | 20 | |
| 200 | 224-226 | 196-204 | 1500 | 240 | ≥175 | ≥ 70 | 20 | |
| 250 | 277-278 | 246-254 | | 240 | ≥175 | ≥ 70 | 20 | |

Tabelle 8

| TYP | 112 A | 112 B | 112 C | 112 D | 112 V | 112 W | 112 m | 112 n | 112 h | 112 H |
|---|---|---|---|---|---|---|---|---|---|---|
| 80 | 130 | 106 | 80 | 210 | 12 | 15 | 75 | 70 | 60 | 205 |
| 100 | 150 | 126 | 100 | 210 | 12 | 15 | 75 | 70 | 60 | 205 |
| 120 | 170 | 146 | 120 | 230 | 12 | 15 | 75 | 70 | 60 | 205 |
| 140 | 190 | 166 | 140 | 250 | 12 | 15 | 75 | 70 | 60 | 205 |
| 160 | 210 | 186 | 160 | 270 | 12 | 15 | 75 | 70 | 60 | 205 |
| 180 | 230 | 206 | 180 | 290 | 12 | 15 | 75 | 70 | 60 | 205 |
| 200 | 250 | 228 | 200 | 310 | 12 | 15 | 75 | 70 | 60 | 205 |
| 250 | 300 | 278 | 250 | 370 | 12 | 15 | 75 | 70 | 60 | 205 |

Tabelle 9

| Typ | 130 A | 130 B | 130 C | 130 D | 130E | 130F | 130G | 130H | 130J | 130K | 130L | 130M | 130N |
|---|---|---|---|---|---|---|---|---|---|---|---|---|---|
| 100 | 105 | 95 | 55 | 115 | | | | | | | | | |
| 120 | 125 | 115 | 75 | 135 | | | | | | | | | |
| 140 | 145 | 135 | 95 | 155 | 30 | 78 | 30 | 15 | 15 | 3 | 3 | 12 | 33 |
| 160 | 165 | 155 | 115 | 175 | | | | | | | | | |
| 180 | 185 | 175 | 135 | 195 | | | | | | | | | |
| 200 | 205 | 195 | 155 | 215 | | | | | | | | | |

Tabelle 10

| TYP | 140 A | 140B | 140 C | 140 D | 140E | 140F | 140 H | 140 I | β |
|---|---|---|---|---|---|---|---|---|---|
| 80 | ≧ 40 | | 8 | 80 | | | 260 | ≧ 42 | |
| 100 | ≧ 40 | | 8 | 100 | | | 260 | ≧ 32 | |
| 120 | ≧ 40 | | 8 | 120 | | | 320 | ≧ 52 | |
| 140 | ≧ 40 | ≥ 30 | 8 | 140 | ≤ 300 | ≤ 300 | 320 | ≧ 42 | ≤30˚ |
| 160 | ≧ 40 | | 8 | 160 | | | 320 | ≧ 32 | |
| 180 | ≧ 40 | | 8 | 180 | | | 360 | ≧ 42 | |
| 200 | ≧ 40 | | 8 | 200 | | | 360 | ≧ 32 | |
| 250 | ≧ 50 | | 9 | 250 | | | ≧ 410 | ≧ 25 | |

**Patentansprüche**

1. Verfahren zur Herstellung eines monolithischen keramischen Formteils für den Kaminbau ausgebildet als Muffenrohr und/oder Rohr mit einer seitlichen Öffnung, vorzugsweise mit einem Abzweigungsstutzen, und/oder einer Kondensatauffangschale und/oder einer Abströmhaube, **wobei vorgesehen ist,**

a) daß eine silikatische Suspension im Gießverfahren oder im Druckgußverfahren in eine mehrteilige Gießform (100) mit poröser Oberfläche eingebracht wird;
b) daß sich aus der eingebrachten Suspension an der porösen Oberfläche der Gießform (100) ein Scherben ausbildet;

c) daß nach der Bildung des Scherbens die Gießform (100) entfernt wird;

d) daß der Scherben getrocknet wird;

e) daß der Scherben in einem Ofen gebrannt wird, wobei der gebrannte Scherben nach dem Abkühlen besagtes monolithisches keramisches Formteil für den Kaminbau bildet.

2. Verfahren nach Anspruch 1,
**dadurch gekennzeichnet,**
**daß** die Gießform (100) gemäß der Hohlguß- oder der Kerngußtechnik ausgestaltet ist oder beide Techniken kombiniert.

3. Verfahren nach einem der Ansprüche 1 und 2,
**dadurch gekennzeichnet,**
**daß** die Teile der Gießform (100) aus Gips- und/oder Kunststoff-Material ausgebildet sind.

4. Verfahren nach einem der Ansprüche 1 bis 3,
**dadurch gekennzeichnet,**
**daß** die mehrteilige Gießform (100) ein Einlegeteil (12) umfaßt, wobei sich das Einlegeteil (12) teilweise oder vollständig in einem Hohlraum der Gießform (100) befindet.

5. Verfahren nach Anspruch 4,
**dadurch gekennzeichnet,**
**daß** das Einlegeteil (12) eine Öffnung zur Kontrolle des Füllstandes der Gießform aufweist.

6. Verfahren nach einem der Ansprüche 4 und 5,
**dadurch gekennzeichnet,**
**daß** die Gießform (100) vor dem Einsetzen des Einlegeteils (12) zu 90 bis 95 Prozent mit der Suspension gefüllt wird.

7. Verfahren nach einem der Ansprüche 4 bis 6,
**dadurch gekennzeichnet,**
**daß** das Einlegeteil (12) aus einem oder einer Kombination von zwei oder mehreren der folgenden Materialien besteht: Gips, Kunststoff, anderes Material.

8. Verfahren nach einem der vorhergehenden Ansprüche,
**dadurch gekennzeichnet,**
**daß** ein oder mehrere Teile der Gießform (100) vor dem Einbringen der Suspension mit einem Trennmittel beschichtet werden.

9. Verfahren nach einem der vorhergehenden Ansprüche,
**dadurch gekennzeichnet,**
**daß** ein oder mehrere Teile der Gießform ein oder mehrere Kanäle (122) für die Anwendung von Wasserstößen und/oder Luftstößen aufweisen.

10. Verfahren nach einem der vorhergehenden Ansprüche,
**dadurch gekennzeichnet,**
**daß** die Bildung des Scherbens durch Druckbeaufschlagung gefördert wird.

11. Verfahren nach Anspruch 10,
**dadurch gekennzeichnet,**
**daß** Druck in einem Bereich von 25 bis 40 bar beaufschlagt wird.

12. Verfahren nach einem der vorhergehenden Ansprüche,
**dadurch gekennzeichnet,**
**daß** der Scherben bei einer Temperatur zwischen 30 und 110 Grad Celsius und über einen Zeitraum von 1 bis 24 Stunden getrocknet wird.

13. Verfahren nach einem der vorhergehenden Ansprüche,
**dadurch gekennzeichnet,**
**daß** vor dem Brennvorgang an dem Scherben ein Brennhilfsmittel (21) angebracht wird.

**14.** Verfahren nach einem der vorhergehenden Ansprüche,
**dadurch gekennzeichnet,**
**daß** der Scherben bei einer Temperatur zwischen 1150 und 1300 Grad Celsius, vorzugsweise bei einer Temperatur zwischen 1150 und 1250 Grad Celsius, gebrannt wird.

**15.** Monolithisches keramisches Formteil für den Kaminbau ausgebildet als Muffenrohr und/oder Rohr mit einer seitlichen Öffnung, vorzugsweise mit einem Abzweigungsstutzen, und/oder einer Kondensatauffangschale und/oder einer Abströmhaube,
**dadurch gekennzeichnet,**
**daß** das monolithische keramische Formteil nach einem der vorangehenden Verfahren hergestellt ist und keine Trenn- und/oder Klebestellen aufweist.

**16.** Monolithisches keramisches Formteil nach Anspruch 15,
**dadurch gekennzeichnet,**
**daß** das monolithische keramische Formteil 40 bis 60 Gew.-% Ton- und/oder Lehmanteil sowie 40 bis 60 Gew.-% Schamotteanteil, jeweils bezogen auf den Gesamttrockenanteil, aufweist.

**17.** Verfahren zur Herstellung einer silikatischen Suspension zum Einsatz in einem Verfahren nach einem der Ansprüche 1 bis 14 oder in einem monolithischen keramischen Formteil nach einem der Ansprüche 15 bis 16, **gekennzeichnet durch** folgende Schritte:

a) Einfüllen von Anmachwasser in ein Mischgefäß,
b) Zugabe eines Verflüssigers zu dem Anmachwasser,
c) Zugabe eines silikatischen Anteils zu dem Anmachwasser,
d) Homogenisieren der Zutaten unter Bildung einer Suspension mit einem Litergewicht von mehr als 1600 g/Liter, und
e) Verhinderung des Absetzens des silikatischen Anteils der Suspension **durch** Rühren bis zum Einbringen der Suspension in die Gießform (100).

**18.** Verfahren nach Anspruch 17,
**dadurch gekennzeichnet**
**daß** der silikatische Anteil aus Lehm- und/oder Tonmaterialien sowie Schamotte, vorzugsweise Kaolin-, Ton-, SiC- und/oder Cordieritschamotte, zusammengesetzt ist.

**19.** Verfahren nach einem der Ansprüche 17 oder 18,
**dadurch gekennzeichnet**
**daß** die Suspension folgende Bestandteile aufweist, die in Summe 100 Gew.-% der Suspension ergeben:

a) 40 bis 80 Gew.-% Anmachwasser,
b) 40 bis 60 Gew.-% Ton- und/oder Lehmanteil, bezogen auf den Gesamttrockenanteil,
c) 40 bis 60 Gew.-% Schamotteanteil, bezogen auf den Gesamttrockenanteil, und
d) 0,1 bis 0,6 Gew.-% Verflüssigeranteil, bezogen auf den Ton- und/oder Lehmtrockenanteil.

**20.** Verfahren nach einem der Ansprüche 17 bis 19,
**dadurch gekennzeichnet**
**daß** der Verflüssiger einen Peptisator oder ein Elektrolyt enthält.

**21.** Verfahren nach einem der Ansprüche 17 bis 20,
**dadurch gekennzeichnet**
**daß** der Verflüssiger nach und nach während des Anrührens der Suspension in das Mischgefäß eingebracht wird.

**22.** Verfahren nach einem der Ansprüche 17 bis 21,
**dadurch gekennzeichnet**
**daß** die Suspension ein Litergewicht von 1865 bis 1910 g/Liter aufweist.

**23.** Verfahren nach einem der Ansprüche 17 bis 22,
**dadurch gekennzeichnet**
**daß** die Suspension zur Verarbeitung als gießfähiger Schlicker ausgebildet ist.

24. Gießform (100) zur Herstellung eines monolithischen keramischen Formteils für den Kaminbau, vorzugsweise nach einem der vorangehenden Verfahren 1 bis 14,
**dadurch gekennzeichnet,**
**daß** die mindestens zweiteilige Gießform (100) zur Herstellung eines Formteils nach den Ansprüchen 15 oder 16 ausgebildet ist.

25. Gießform nach Anspruch 24,
**dadurch gekennzeichnet,**
**daß** die Gießform (100) eine poröse Oberfläche, und/oder einen porösen Körper, vorzugsweise aus Gips und/oder Kunststoff und/oder einem anderen geeigneten Material, aufweist.

Fig. 1

*Fig. 2*

Fig. 3a

Fig. 3b

Fig. 4a

Fig. 5a

Fig. 6a

Fig. 4b

Fig. 5b

Fig. 6b

Fig. 7a

Fig. 7b

Fig. 8a

Fig. 8b

Fig. 8c

EP 1 927 447 A2

Fig. 9b

Fig. 9c

Fig. 9a

24

Fig. 10a

Fig. 10b

Fig. 11a

Fig. 11b

Fig. 12a

Fig. 12b

Fig. 13a

Fig. 13b

Fig. 14a

Fig. 14b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2706803 A1
- DE 4017000 A1